# EUROPEAN PATENT APPLICATION

(11) **EP 4 524 753 A1**
(43) Date of publication of application: **19.03.2025**
(21) Application number: 24195342.1
(22) Date of filing: 20.08.2024
(51) Int. Cl.: G06F 12/02

(54) **HOST-DEVICE GARBAGE COLLECTION COORDINATION FOR STORAGE DEVICES**

(30) Priority: 07.09.2023 US 202363537190 P; 17.11.2023 US 202318513507
(71) Applicant: Samsung Electronics Co., Ltd, Suwon-si, Gyeonggi-do 16677 (KR)
(72) Inventor: GONZALEZ, Javier, Cambridge, CB4 0DS (GB); GEORGE, Arun, 560048 Bengaluru, Karnataka (IN); HELMICK, Daniel Lee, San Jose, CA, 95134 (US); ALLISON, Michael Scott, San Jose, CA, 95134 (US)
(74) Representative: Kuhnen & Wacker Patent- und Rechtsanwaltsbüro PartG mbB

(57) **Abstract**

A system is disclosed. The system may include a storage device 120 and a processor 110. The processor 110 may send a write request to the storage device 120. The write request may include a data to be written and a reclaim unit identifier identifying how the data is to be organized on the storage device. The processor 110 may also send a message to the storage device 120 regarding management of garbage collection of a reclaim unit identified by the reclaim unit identifier.

## Description

### FIELD

The disclosure relates generally to storage devices, and more particularly to host and device coordination.

### BACKGROUND

Storage devices may use information from a host to manage where data is placed. For example, if the host knows that various data may be expected to expire around the same time, all those data may be placed in the same block. That way, when the data expires, there should not be any remaining data in the block that might need to be programmed (moved to another place in the storage device) so that the block may be erased. But the storage device might not know when the block is expected to be erased.

A need remains to coordinate the host and the storage device when performing coordinated garbage collection.

### SUMMARY

A processor may write data to a reclaim unit of a storage device. The processor may notify the storage device that the processor performs host-managed garbage collection on the reclaim unit. Embodiments of the invention may be directed to the processor, to the storage device and to the system as such, and to corresponding methods performed by one or more of the aforementioned as such.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a machine including a storage device that may support host-managed garbage collection, according to embodiments of the disclosure.
FIG. 2 shows details of the machine of FIG. 1, according to embodiments of the disclosure.
FIG. 3 shows details of the storage device of FIG. 1, according to embodiments of the disclosure.
FIG. 4 shows a view of the storage in the storage device of FIG. 1, according to embodiments of the disclosure.
FIG. 5 shows the garbage collection priority unit of FIG. 3 assigning priorities to different reclaim units of FIG. 4, according to embodiments of the disclosure.
FIG. 6A shows the processor of FIG. 1 and the storage device of FIG. 1 exchanging messages in support of host-managed garbage collection, according to embodiments of the disclosure.
FIG. 6B shows the processor of FIG. 1 and the storage device of FIG. 1 further exchanging messages in support of host-managed garbage collection, according to embodiments of the disclosure.
FIG. 7 shows various different ways in which the reclaim units of FIG. 4 may be identified, according to embodiments of the disclosure.
FIG. 8 shows the storage device of FIG. 1 performing garbage collection of a reclaim unit of FIG. 4, according to embodiments of the disclosure.
FIG. 9 shows a flowchart of an example procedure for the processor of FIG. 1 to perform host-managed garbage collection of the reclaim unit of FIG. 4, according to embodiments of the disclosure.
FIG. 10 shows a flowchart of an example procedure for the processor of FIG. 1 to perform host-managed garbage collection of the reclaim unit of FIG. 4, according to embodiments of the disclosure.
FIG. 11 shows a flowchart of an example procedure for the processor of FIG. 1 to request allocation of the reclaim unit of FIG. 4 from the storage device of FIG. 1, according to embodiments of the disclosure.
FIG. 12 shows a flowchart of an example procedure for the processor of FIG. 1 to determine the reclaim unit identifier of FIGs. 6A-6B, according to embodiments of the disclosure.
FIG. 13 shows a flowchart of an example procedure for the processor of FIG. 1 to be notified by the storage device of FIG. 1 that the storage device of FIG. 1 is performing garbage collection of the reclaim unit of FIG. 4, according to embodiments of the disclosure.
FIG. 14 shows a flowchart of an example procedure for the storage device of FIG. 1 to support host-managed garbage collection of the reclaim unit of FIG. 4, according to embodiments of the disclosure.
FIG. 15 shows a flowchart of an example procedure for the storage device of FIG. 1 to allocate the reclaim unit of FIG. 4, according to embodiments of the disclosure.
FIG. 16 shows a flowchart of an example procedure for the storage device of FIG. 1 to send the reclaim unit identifier of FIGs. 6A-6B to the processor of FIG. 1, according to embodiments of the disclosure.
FIG. 17 shows a flowchart of an example procedure for the storage device of FIG. 1 to send the reclaim unit identifier of FIGs. 6A-6B to the processor of FIG. 1 using a log page, according to embodiments of the disclosure.
FIG. 18 shows a flowchart of an example procedure for the storage device of FIG. 1 to map the logical address of FIG. 7 to the reclaim unit of FIG. 4, according to embodiments of the disclosure.
FIG. 19 shows a flowchart of an example procedure for the storage device of FIG. 1 to perform garbage collection after the processor of FIG. 1 has completed garbage collection on the reclaim unit of FIG. 4, according to embodiments of the disclosure.
FIG. 20 shows a flowchart of an example procedure for the garbage collection priority unit of FIG. 3 to assign the priority of FIG. 5 to the reclaim unit of FIG. 4, according to embodiments of the disclosure.
FIG. 21 shows a flowchart of an example procedure for the storage device of FIG. 1 to select the reclaim unit of FIG. 4 for garbage collection, according to embodiments of the disclosure.
FIG. 22 shows a flowchart of an example procedure for the storage device of FIG. 1 to perform garbage collection on the reclaim unit of FIG. 4, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

When a host writes data to a storage device, the host might know or have an estimate of approximately how long the data is expected to live before it expires. The host may therefore ask the storage device to place the data with other data with a similar lifetime. In this manner, it may be expected that all data in a particular block may expire at around the same time, which means that when the block is selected for erasure (as part of garbage collection), there might not be any data that needs to be subjected to garbage collection (moved to another location on the storage device). If there is no data that needs to be subjected to garbage collection, the overall efficiency of the storage device may be increased, and the write amplification factor (a factor reflecting how often data may be read and rewritten in the storage device without being changed) may be minimized.

For example, a host may implement a file system, database, or other data management application. Such applications may group data together in units on the storage device. For example, files in the file system may organized in a common folder, entries in the database may be stored in tables, and the like. The host may invalidate (for example, delete) such data groups, or may change the data stored in the data groups (for example, overwriting old data with new data). The host may choose to implement garbage collection on such data groups, leveraging its knowledge about how the data is organized and how long the data is expected to remain valid. To perform garbage collection, the host may read existing valid data from the data groups, store the existing valid data in a new data group, and/or deallocate the data in the data groups. This host-managed garbage collection may be coordinated with garbage collection operations of the storage device.

Embodiments of the disclosure may attempt to achieve these benefits by coordinating the host and the storage device in garbage collection. The host may identify a block or other reclaim unit and inform the storage device not to perform garbage collection on that block. The storage device may then attempt to avoid performing garbage collection on that block while the host decides if the block may be deallocated. Once the host deallocates the block, the host may inform the storage device that it may perform garbage collection on the block to move any remaining valid data to a new block. By informing the storage device that the block may be deallocated, the host may reduce the amount of activity performed by the storage device, which may help to reduce the write amplification factor.

Embodiments of the disclosure may also involve the host informing the storage device to expedite garbage collection on a block or reclaim unit. The host may provide the storage device with a list of logical identifiers that may be deallocated, which may expedite garbage collection on one or more blocks.

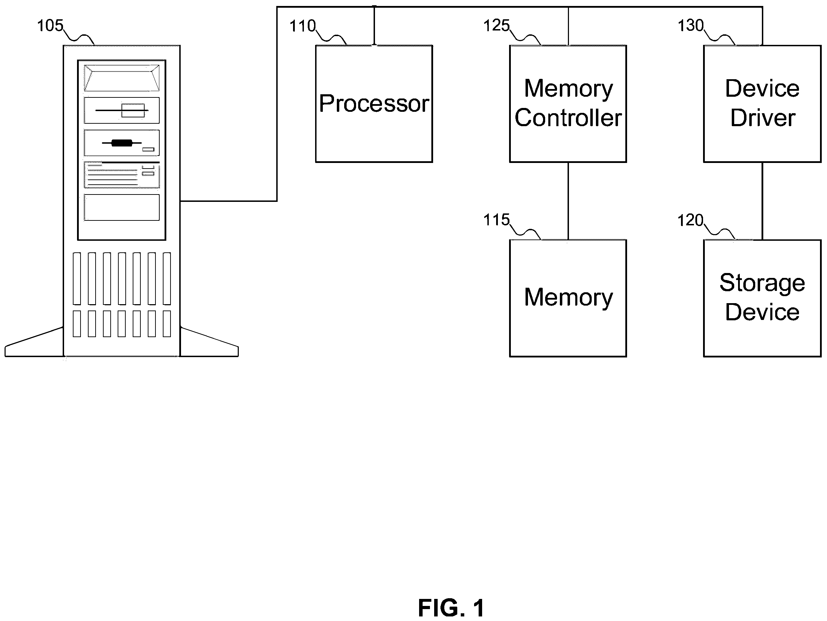

FIG. 1 shows a machine including a storage device that may support host-managed garbage collection, according to embodiments of the disclosure. In FIG. 1, machine 105, which may also be termed a host or a system, may include processor 110, memory 115, and storage device 120. Processor 110 may be any variety of processor. Processor 110 may also be called a host processor. (Processor 110, along with the other components discussed below, are shown outside the machine for ease of illustration: embodiments of the disclosure may include these components within the machine.) While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), flash memory, etc. Memory 115 may be a volatile or non-volatile memory, as desired. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115.

Storage device 120 may be used to store data that may be termed "long-term": that is, data that is expected to be stored for longer periods of time, or that does not need to be stored in memory 115. Storage device 120 may be accessed using device driver 130. While FIG. 1 shows one storage device 120, there may be any number (one or more) of storage devices in machine 105. Storage device 120 may also be used to store data in a persistent, or non-volatile, manner: that is, in a manner that retains data even if storage device 120 is no longer provided with power. This may be contrasted with, for example, memory 115, which is often implemented using volatile memory (such as DRAM), which may lose data if memory 115 is no longer provided with power.

Embodiments of the disclosure may include any desired mechanism to communicate with storage device 120. For example, storage device 120 may connect to one or more busses, such as a Peripheral Component Interconnect Express (PCIe) bus, or storage device 120 may include Ethernet interfaces or some other network interface. Other potential interfaces and/or protocols to storage device 120 may include Non-Volatile Memory Express (NVMe), NVMe over Fabrics (NVMe-oF), Remote Direct Memory Access (RDMA), Transmission Control Protocol/Internet Protocol (TCP/IP), Universal Flash Storage (UFS), embedded MultiMediaCard (eMMC), InfiniBand, Serial Attached Small Computer System Interface (SCSI) (SAS), Internet SCSI (iSCSI), Serial AT Attachment (SATA), and cache-coherent interconnect protocols, such as the Compute Express Link (CXL) protocols, among other possibilities.

While FIG. 1 uses the generic term "storage device", embodiments of the disclosure may include any storage device formats that may benefit from the use of computational storage units, examples of which may include hard disk drives and Solid State Drives (SSDs). Any reference to "SSD" below should be understood to include such other embodiments of the disclosure.

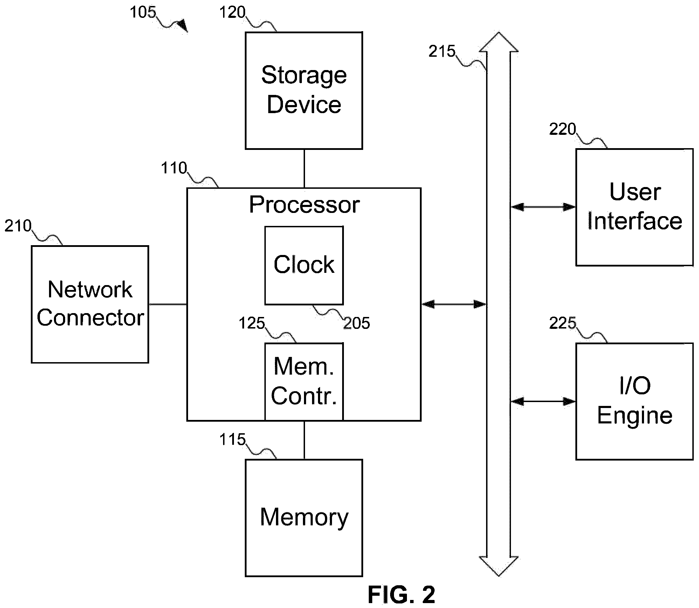

FIG. 2 shows details of machine 105 of FIG. 1, according to embodiments of the disclosure. In FIG. 2, typically, machine 105 includes one or more processors 110, which may include memory controllers 120 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 120, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

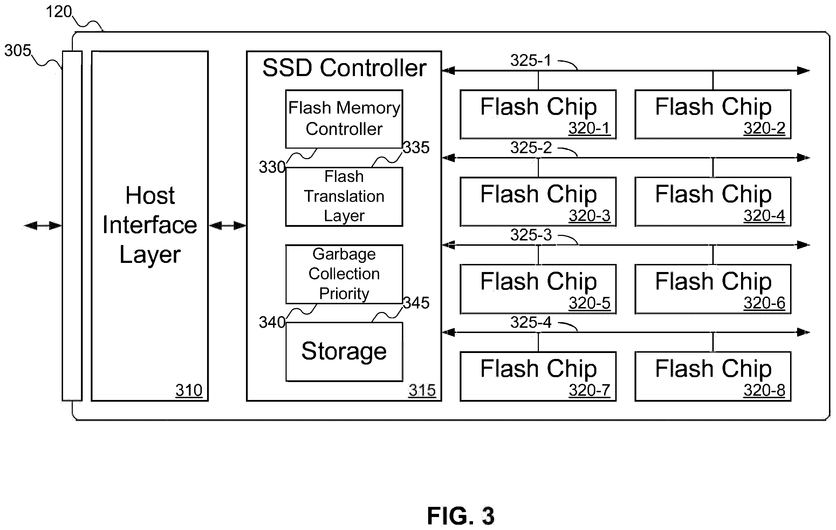

FIG. 3 shows details of storage device 120 of FIG. 1, according to embodiments of the disclosure. In FIG. 3, storage device 120 is shown using an implementation including a Solid State Drive (SSD) 120, but embodiments of the disclosure are applicable to any type of storage device that may perform garbage collection or media management, as discussed below.

SSD 120 may include interface 305. Interface 305 may be an interface used to connect SSD 120 to machine 105 of FIG. 1. SSD 120 may include more than one interface 305: for example, one interface might be used for block-based read and write requests, and another interface might be used for key-value read and write requests. While FIG. 3 suggests that interface 305 is a physical connection between SSD 120 and machine 105 of FIG. 1, interface 305 may also represent protocol differences that may be used across a common physical interface. For example, SSD 120 might be connected to machine 105 using a U.2, Enterprise and Datacenter Standard Form Factor (EDSFF), or an M.2 connector, but may support block-based requests and key-value requests: handling the different types of requests may be performed by a different interface 305. SSD 120 may also include a single interface 305 that may include multiple ports, each of which may be treated as a separate interface 305.

SSD 120 may also include host interface layer 310, which may manage interface 305. If SSD 120 includes more than one interface 305, a single host interface layer 310 may manage all interfaces, SSD 120 may include a host interface layer 310 for each interface, or some combination thereof may be used.

SSD 120 may also include SSD controller 315 and various flash memory chips 320-1 through 320-8, which may be organized along channels 325-1 through 325-4. Flash memory chips 320-1 through 320-8 may be referred to collectively as flash memory chips 320, and may also be referred to as flash chips 320, memory chips 320, NAND chips 320, or simply chips 320. Flash memory chips 320 may also be referred to as dies. Channels 325-1 through 325-4 may be referred to collectively as channels 325. SSD controller 315 may manage sending read requests and write requests to flash memory chips 320 along channels 325. Controller 315 may also include flash memory controller 330, which may be responsible for issuing commands to flash memory chips 320 along channels 325. Flash memory controller 330 may also be referred to more generally as memory controller 330 in embodiments of the disclosure where storage device 120 stores data using a technology other than flash memory chips 320. Although FIG. 3 shows eight flash memory chips 320 and four channels 325, embodiments of the disclosure may include any number (one or more, without bound) of channels 325 including any number (one or more, without bound) of flash memory chips 320.

Within each flash memory chip or die, the space may be organized into planes. These planes may include multiple erase blocks (which may also be referred to as blocks), which may be further subdivided into wordlines. The wordlines may include one or more pages. For example, a wordline for Triple Level Cell (TLC) flash media might include three pages, whereas a wordline for Multi-Level Cell (MLC) flash media might include two pages.

Erase blocks may also be logically grouped together by controller 315, which may be referred to as a superblock. This logical grouping may enable controller 315 to manage the group as one, rather than managing each block separately. For example, a superblock might include one or more erase blocks from each plane from each die in storage device 120. So, for example, if storage device 120 includes eight channels, two dies per channel, and four planes per die, a superblock may include 8 × 2 × 4 = 64 erase blocks.

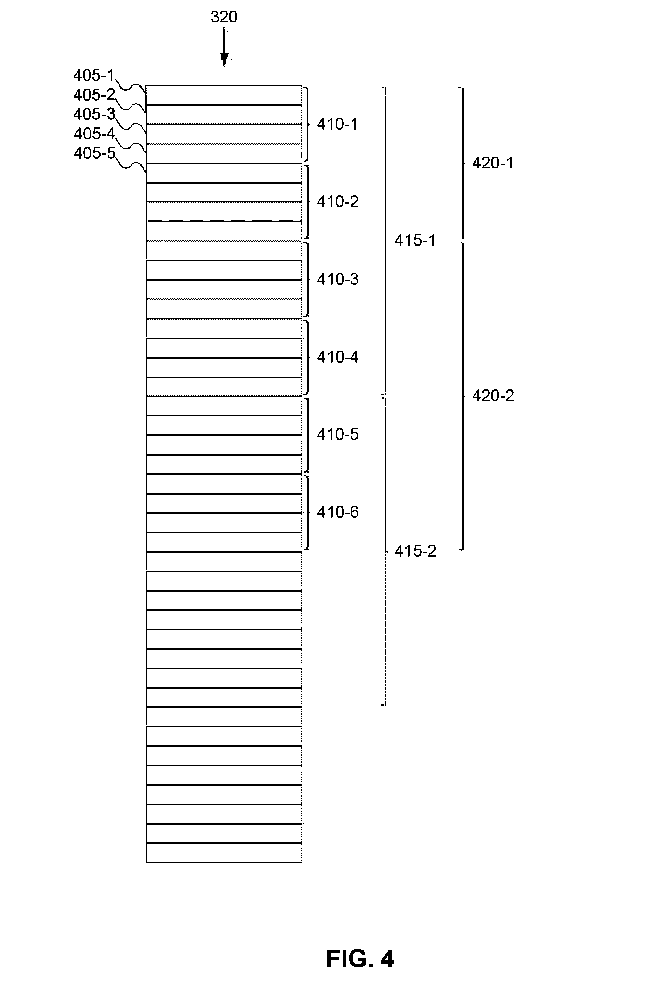

FIG. 4 presents an abstracted view of the storage offered by storage device 120. In FIG. 4, the storage offered by storage device 120 of FIG. 1 is shown as a continuous array of pages 405-1 through 405-5, which may be referred to collectively as pages 405. Pages 405 may be organized into blocks 410-1 through 410-6, which may be referred to collectively as blocks 410. For example, block 410-1 is shown as including pages 405-1 through 405-4: blocks 410-2 through 410-6 may similarly include various pages 405. In addition, as discussed above, controller 315 of FIG. 3 may organize blocks 410 into superblocks 415-1 and 415-2, which may be referred to collectively as superblocks 415.

In storage device 120 of FIG. 1, either the page or the wordline may be the smallest unit of data that may be read or written. In some embodiments of the disclosure, the page or the wordline might be the smallest unit for both reading or writing; in other embodiments of the disclosure, the page or wordline might differ as to which is the smallest unit for reading or writing. For example, the page might be the smallest unit to be read, but the wordline might be the smallest unit to be written. For example, as discussed above, a wordline for TLC flash media might include three pages. All three pages may be written at the same time to write the wordline: if not enough data is yet available to fill all three pages, then the available data may be buffered until enough data is available to write the wordline. But it might be possible to read a single page, rather than reading the entire wordline.

Page sizes may vary as desired: for example, a page may store approximately 2, 4, 8, or 16 kilobytes (KB) of data: other sizes of pages are also possible. (Note that the page size may be larger than the amount of data stored therein, as a page may also include an Error Correction Code (ECC), Protection Information (PI), and/or metadata that controller 315 of FIG. 3 may use for other purposes.)

The Logical Block Address (LBA) provided by processor 110 of FIG. 1 and used to identify the data to be read or written may be of a different size than the size of a page. For example, processor 110 of FIG. 1 may manage LBAs in units of 512 bytes (B) or 4 KB of data. LBAs may also be referred to as sectors. If the LBAs are 512 B, then eight sequential LBAs may be combined and managed as a 4 KB unit. Similarly, if the LBAs are 4 KB, then four sequential LBAs may be combined and managed as a 16 KB unit to fill a single page. If a wordline includes more than one page, then additional pages may be combined to form the wordline. So, continuing the earlier example of a wordline including three TLC pages, storage device 120 of FIG. 1 may accumulate three 16 KB pages to program together as a wordline. Storage device 120 of FIG. 1 may buffer sectors until enough data is available to program the wordline.

If less than a full page is to be written, the excess space is in the page may be considered "unused". A wordline may include any number (one or more) of pages 405: for example, each wordline might include a power of two, such as two, four, or eight of pages 405, or some other number of pages 405. Blocks 410 may include any number (one or more) of wordlines: for example, blocks 410 might each include a power of two, such as 128 or 256, of wordlines, or some other number of wordlines. Superblocks 415 may include any number (one or more) of blocks 410: for example, superblocks 415 might each include a power of two, such as 128 or 256, of blocks 410, or some other number of blocks 410. In some embodiments of the disclosure, each block 410 may include the same number of pages 405, and each superblock 415 may include the same number of blocks 410; in other embodiments of the disclosure, each block 410 might include differing numbers of pages 405, and/or each superblock 415 might include differing numbers of blocks 410.

In the remainder of this document, any reference to reading or writing page 405 may be understood to also refer to reading or writing a wordline, depending on the implementation and the unit of data that may be read or written.

While pages 405 may be written and read, SSD 120 of FIG. 3 might not permit data to be overwritten: that is, existing data may be not be replaced "in place" with new data. Instead, when data is to be updated, the new data is written to a new page 405, usually on a new block 410, on SSD 120 of FIG. 3, and the original page is invalidated (marked ready for erasure). Thus, pages 405 typically have one of three states: free (ready to be written), valid (containing valid data), and invalid (no longer containing valid data, but not usable until erased) (the exact names for these states may vary).

In addition, while pages 405 may be written and read individually, block 410 is the basic unit of data that may be erased (in some embodiments of the disclosure, the basic unit of data that may be erased is superblock 415). That is, pages are not erased individually: all the pages in a block (or superblock) are typically erased at the same time. For example, if block 410 includes 256 pages 405, then all 256 pages 405 in block 410 are erased at the same time. This arrangement may lead to some management issues for SSD 120 of FIG. 3: if a block is selected for erasure that still contains some valid data, that valid data may need to be copied to a free page elsewhere on SSD 120 of FIG. 3 before the block may be erased In this manner, SSD 120 of FIG. 3 may ensure that valid data in block 410 selected for erasure remain somewhere on SSD 120 of FIG. 3. This operation to copy valid data to a free page on SSD 120 of FIG. 3 may be referred to as "programming" the valid data.

Returning to FIG. 3, because the units at which data is written and data is erased differ (page 405 of FIG. 4 vs. block 410 of FIG. 4 or superblock 415 of FIG. 4), if SSD 120 waited until a block contained only invalid data before erasing the block, SSD 120 might actually run out of available storage space, even though the amount of valid data might be less than the advertised capacity of SSD 120. To avoid such a situation, SSD controller 315 may implement a garbage collection function (not shown in FIG. 3). The function of garbage collection may be to identify blocks that contain all or mostly all invalid pages and erase those blocks so that valid data may be written into them again. With reference to the three states-free, valid, and invalid-discussed above, garbage collection may be described as the process of moving blocks from the invalid state to the free state. But if the block selected for garbage collection includes valid data, that valid data will be erased by the garbage collection logic (since the unit of erasure is the block, not the page). To avoid such data being lost, the garbage collection logic may read the valid data from such blocks and program that valid data into other blocks. Once the data has been programmed into a new block (and the table mapping logical block addresses (LBAs) to physical block addresses (PBAs) updated to reflect the new location of the data), the block may then be erased, returning the state of the pages in the block to a free state.

Since programming valid data from a block selected for garbage collection might have an impact on other commands-reading data from one block and writing data to another block might temporarily delay execution of requests from processor 110 of FIG. 1-SSD 120 may perform garbage collection at times when SSD 120 is not busy executing requests on behalf of processor 110 of FIG. 1. That is, SSD 120 may perform garbage collection at times when performing garbage collection will have minimal impact on processing requests from processor 110 of FIG. 1.

As suggested by the above discussion, in some embodiments of the disclosure, garbage collection may involve both programming valid data from a block selected for erasure into a new block, as well as the erasure of the block so selected. Such embodiments of the disclosure work well where requests sent to SSD 120 are intermittent: SSD 120 may use the "down time" to ensure that the number of free pages is maximized.

But in other embodiments of the disclosure, SSD 120 may expect a "steady state" of requests coming in, with no significant "down time". In such embodiments of the disclosure, garbage collection may be performed when an opportunity arises or when the number of free pages drops below a threshold, and may involve only programming valid data: only performing garbage collection when SSD 120 is not busy executing requests from processor 110 of FIG. 1 might not be practical. Then, when SSD 120 receives a write request from processor 110 of FIG. 1, SSD 120 may select a block that has been subject to garbage collection but not yet erased and may erase that block before writing the data to that block. SSD 120 may aim to keep some number of blocks ready to be written except for needing erasure. For example, SSD 120 might perform garbage collection when there are fewer than, say, 256 blocks 410 of FIG. 4 ready for writing except for needing erasure. Alternatively, the threshold SSD 120 might use to decide when to perform garbage collection might be based on units other than blocks 410 of FIG. 4. For example, SSD 120 might track how many superblocks 415 of FIG. 4 are ready for writing except for needing erasure, and may perform garbage collection as needed to ensure that there are at least, say, one through four superblocks 415 of FIG. 4 ready for writing except for needing erasure.

This approach, which may be described as "just in time" erasure, may ensure that there are pages ready to be written to pending erasure, but reducing the amount of time spent performing garbage collection (by not erasing the blocks as part of garbage collection). These other embodiments of the disclosure blur the line slightly between the "invalid" and "free" states, in that pages are almost "free" pending erasure, but erasure is relatively fast since the other garbage collection processes are complete. Thus, pages may move relatively quickly from "invalid" to "free" and then to "valid" states. In such embodiments of the disclosure, pages may be considered to be in the "free" state when they are part of a block that is ready for erasure, even if the block has not yet been erased (with the "invalid" state then meaning that the page no longer contains valid data but is part of a block that includes at least one page that still contains valid data).

SSD 120 may also have a finite number of times each cell may be written before cells may not be trusted to retain the data correctly. This number is usually measured as a count of the number of program/erase cycles the cells undergo. Typically, the number of program/erase cycles that a cell may support mean that SSD 120 will remain reliably functional for a reasonable period of time: for personal users, the user may be more likely to replace SSD 120 due to insufficient storage capacity than because the number of program/erase cycles has been exceeded. But in enterprise environments, where data may be written and erased more frequently, the risk of cells exceeding their (Program/Erase) cycle count may be more significant. In some embodiments of the disclosure, an estimate of the PE count or an estimation of the PE count using historical information (such as temperature, the rate of recent PE activity, the number of reads to a block, etc.) may be used instead of the actual P/E count for the block.

To help offset this risk, SSD controller 315 may also include a wear leveling controller (not shown in FIG. 3). Wear leveling may involve selecting data blocks to program data based on the blocks' program/erase cycle counts. There may also be other reasons to favor using particular blocks in storage device 120. Wear leveling may be performed as part of garbage collection-to select where the valid data is to be programmed-but wear leveling may also be performed independently of garbage collection (to move data around to attempt to level block usage, even without performing garbage collection). By selecting blocks with a lower program/erase cycle count to program new data, the SSD may be able to avoid increasing the program/erase cycle count for some blocks beyond their point of reliable operation. By keeping the wear of each block as close as possible to other blocks, the SSD may remain reliable for a longer period of time.

As discussed above, garbage collection may involve moving data from one page 405 of FIG. 4 to another page 405 of FIG. 4. While SSD 120 might inform processor 110 of FIG. 1 that data has been moved from one page 405 of FIG. 4 to another page 405, such information may be unnecessary. That is, processor 110 of FIG. 1 may not need to know in which page 405 of FIG. 4 any particular data is stored. Instead, SSD controller 315 may include flash translation layer (FTL) 335 (which may be termed more generally a translation layer, for storage devices that do not use flash storage). FTL 335 may handle translation of LBAs or other logical IDs (as used by processor 110 of FIG. 1) and physical block addresses (PBAs) or other physical addresses where data is stored in flash chips 320. FTL 335, may also be responsible for tracking data as it is relocated from one PBA to another, as may occur when performing garbage collection and/or wear leveling.

Because storage device 120 may perform either garbage collection or wear leveling, it may happen that a particular data is written to multiple pages 405 of FIG. 4 in the storage of storage device 120. For example, data may be written by processor 110 of FIG. 1 to storage device 120, then programmed to another location when the block containing the data is subject to garbage collection, or as part of wear leveling. This consequence of how storage device 120 manages its data may be referred to as a write amplification factor (WAF), and may reflect the fact that the same data may be written multiple times inside of storage device 120. This WAF may consider just how many times the same data is written by storage device 120: if processor 110 updates the data with a new data, or if processor 110 relocates data from one block to another block (for example, as part of host garbage collection), the writes triggered by processor 110 may be considered as a new data for WAF purposes, and might not be considered to increase the WAF for the original data.

In an ideal world, the WAF for any data would be 1. That is, the data would be written once on a command from processor 110, and left alone until invalidated by processor 110, at which point page 405 of FIG. 4 containing the data may be erased. But the real world is not ideal: different data may be invalidated at different times, potentially leaving a patchwork of valid data across pages 405 of FIG. 4 in storage device 120. Garbage collection and wear leveling, in an attempt to optimize use of storage device 120, may result in a WAF that is greater than 1.

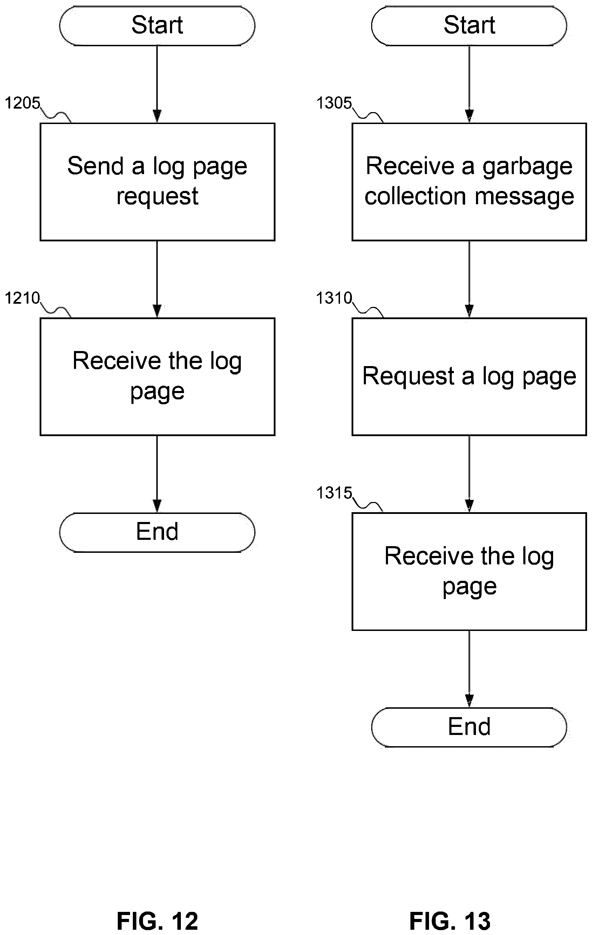

To attempt to reduce the WAF without necessarily affecting how storage device 120 may perform garbage collection and wear leveling, storage device 120 may coordinate its garbage collection activities with processor 110 of FIG. 1. For example, processor 110 of FIG. 1 may know when a particular data will be unnecessary and the associated storage may be invalidated/deallocated. For example, processor 110 of FIG. 1 might start its garbage collection process on data objects. In this process, processor 110 of FIG. 1 might know that it will soon deallocate a range of LBAs on storage drive 120. But processor 110 of FIG. 1 might first read valid data out of some valid LBAs. Following those reads, processor 110 of FIG. 1 may expect to deallocate the entire range of LBAs. Storage device 120 may benefit from knowing that processor 110 of FIG. 12 intends to deallocate this range of LBAs, so that storage device 120 may avoid performing garbage collection on any blocks 410 of FIG. 4 including data associated with the LBAs in this range. By coordinating garbage collection with processor 110 of FIG. 1, storage device 120 may be able to avoid unnecessary programming of data, which may reduce the WAF and may avoid unnecessarily increasing the program/erase cycle counts for various pages 405 of FIG. 4.

To that end, controller 315 may also include garbage collection priority unit 340 and storage 345. Garbage collection priority unit 340 may determine the relative priority assigned to various blocks 410 of FIG. 4 of storage device 120. Typically, garbage collection priority unit 340 may assign relative priorities to blocks 410 of FIG. 4 (or superblocks 415 of FIG. 4, depending on the unit at which storage device 120 may perform garbage collection) based on the number of free pages 405 of FIG. 4 that may be added by erasing block 410 of FIG. 4. For example, a block that has no valid data may be assigned a higher priority than a block that has one page containing valid data (and therefore require programming), which may be assigned a higher priority than a block that has two pages containing valid data, and so on. For example, garbage collection priority unit 340 may assign a priority to a block that is the number of pages in the block containing valid data: lower numbers may therefore have a higher priority. Controller 315 may then select blocks for garbage collection based on their relative priority: blocks with a higher priority may be subject to garbage collection before blocks with lower priority. (Obviously, the priority assigned to a block may change as more pages in the block are invalidated.)

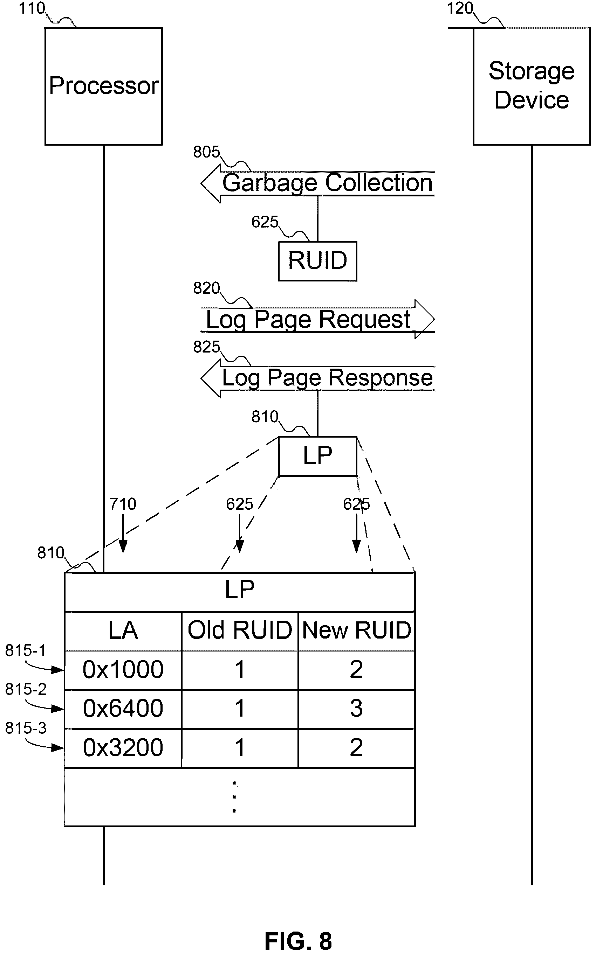

But in some situations, processor 110 of FIG. 1 may indicate that processor 110 of FIG. 1 wants to manage garbage collection of a block. For example, processor 110 of FIG. 1 might know that the data in a particular block may be invalidated in the near future. To avoid storage device 120 selecting that block for garbage collection (which might result in the valid data remaining in the block being written to other free pages in storage device 120 only to be deleted shortly), processor 110 of FIG. 1 may inform storage device 120 that processor 110 of FIG. 1 will manage garbage collection for that block. In that case, garbage collection priority unit 340 may assign the block an artificially low priority to avoid that block being selected by storage device 120 for garbage collection. (Note that storage device 120 might still want to perform garbage collection on that block. For example, if processor 110 of FIG. 1 has indicated that it will manage garbage collection of all blocks on storage device 120, storage device 120 might still need to perform its own garbage collection to ensure that sufficient free blocks are available. Or, if the block whose garbage collection is being managed by processor 110 of FIG. 1 is the only block that will result in an appreciable increase in the number of free blocks, storage device 120 might still want to select that block for garbage collection. How processor 110 of FIG. 1 may handle the situation where storage device 120 selects a block for garbage collection whose garbage collection processor 110 of FIG. 1 has indicated it will manage is discussed further with reference to FIG. 8.)

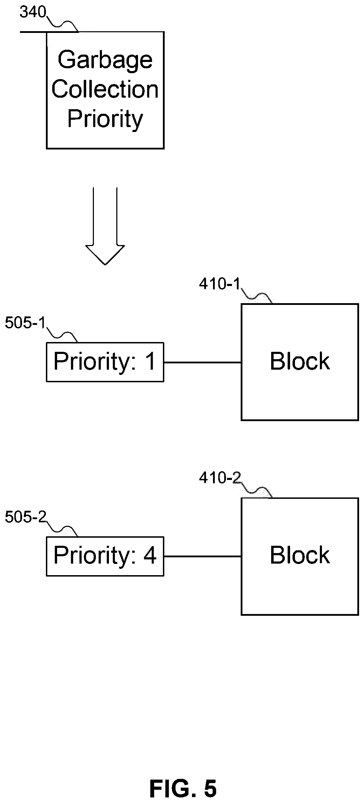

FIG. 5 shows garbage collection priority unit 340 of FIG. 3 assigning priorities to different reclaim units of FIG. 4, according to embodiments of the disclosure. A reclaim unit may be any desired unit of storage subject to erasure by storage device 120 of FIG. 1. Reclaim units are discussed further with reference to FIG. 4 below.

In FIG. 5, garbage collection priority unit 340 may assign priority 505-1 to block 410-1, and priority 505-2 to block 410-2. In general, priorities 505-1 and 505-2 may be referred to collectively as priorities 505. Priority 505-1 may indicate that block 410-1 has a relatively high priority for garbage collection purposes: for example, a block where all or almost all pages 405 of FIG. 4 contain invalid data. Priority 505-2 may indicate that block 410-2 has a relative low priority for garbage collection purposes: for example, a block where most of pages 405 of FIG. 4 contain valid data, or a block that processor 110 of FIG. 1 has indicated it will manage for garbage collection.

While the above discussion focuses on lowering priority 505 of blocks 410 for which processor 110 of FIG. 1 will manage garbage collection, in some embodiments of the disclosure, processor 110 of FIG. 1 may also ask for a higher priority for garbage collection for block 410. For example, when processor 110 of FIG. 1 finishes managing garbage collection of block 410, may inform storage device 120 of FIG. 1 that block 410 may be expedited for garbage collection by storage device 120 of FIG. 1. For example, processor 110 of FIG. 1 might send a command to storage device 120 of FIG. 1, asking storage device 120 of FIG. 1 to deallocate block 410. Then, even if block 410 contains valid data, storage device 120 of FIG. 1 may assume that processor 110 of FIG. 1 knows what it is doing, and storage device 120 of FIG. 1 may invalidate all pages 405 of FIG. 4 in block 410 and immediately (or shortly thereafter) subject block 410 to garbage collection. In case storage device 120 of FIG. 1 does not immediately subject block 410 to garbage collection, garbage collection priority unit 340 may assign a high priority 505 to block 410, so that block 410 may be subject to garbage collection soon.

Since the relative priority of various blocks 410 being subject to garbage collection may change-decreased priority when processor 110 of FIG. 1 is performing host-managed garbage collection, or increased priority when processor 110 of FIG. 1 has indicated that block 410 is to be deallocated-storage device 120 of FIG. 1 may want to store information about blocks 410 whose priority for garbage collection has been adjusted. Returning to FIG. 3, controller 315 may also include storage 345. Storage 345 may be used to store information about the priorities assigned to blocks 410 of FIG. 4, and in particular to store priorities assigned to blocks 410 of FIG. 4 for which processor 110 of FIG. 1 has indicated it will manage garbage collection, or for which processor 110 of FIG. 1 has indicated may be deallocated (and therefore has no valid data to program).

While the above discussion focuses on processor 110 of FIG. 1 managing garbage collection of a block 410 of FIG. 4, in general, the number of blocks in storage device 120 may be sufficiently large that it may be inefficient for processor 110 of FIG. 1 to manage garbage collection at the block level. Therefore, instead of managing garbage collection of blocks 410 of FIG. 4, processor 110 of FIG. 1 and storage device 120 may use another unit, such as superblock 415 of FIG. 4: this unit may be called more generally a reclaim unit.

Returning to FIG. 4, FIG. 4 also shows reclaim units 420-1 and 420-2, which may be referred to collectively as reclaim units 420. A reclaim unit may be any desired unit of storage subject to erasure by storage device 120. Thus, for example, reclaim units 420 may be blocks 410 or superblocks 415. In general, reclaim units 420 may be any unit that is at least as large as the smallest unit on which garbage collection may be performed. Thus, for example, if storage device 120 of FIG. 1 may erase at the granularity of blocks 410, reclaim units 420 may be blocks 410 or superblocks 415, but not pages 405. Or, if storage device 120 of FIG. 1 may erase at the granularity of superblocks 410, then reclaim units may be superblocks 415, but not pages 405 or blocks 410. In the example shown in FIG. 4, storage device 120 of FIG. 1 may be assumed to erase at the granularity of blocks 410: this example may continue throughout the rest of this document.

In some embodiments of the disclosure, reclaim units 420 may coincide with blocks 410 or superblocks 415. That is, reclaim units 420 may each be one block 410 or one superblock 415. In other embodiments of the disclosure, reclaim units 420 may be larger than blocks 410 or superblock 415. Thus, for example, reclaim unit 420-1 is shown as including blocks 410-1 and 410-2 (that is, two blocks). In general, reclaim units 420 may be of any size that may support erasure by storage device 120 of FIG. 1.

In some embodiments, each reclaim unit 420 may have the same size. For example, each reclaim unit 420 might include two blocks 410. But in other embodiments of the disclosure, different reclaim units 420 may have different sizes. For example, while reclaim unit 420-1 is shown as including two blocks 410-1 and 410-2, reclaim unit 420-2 is shown as including four blocks 410-3 through 410-6.

In embodiments of the disclosure that support variable-sized reclaim units 420, processor 110 of FIG. 1 may provide storage device 120 information that may be used in selecting a reclaim unit in which to store data. For example, consider the situation where processor 110 of FIG. 1 wishes to store a number of related data, and assume that the total size of these data is three megabytes (MB). If each page 405 may store four KB of data, and each block 410 includes 256 pages 405, then each block 410 may store up to one MB of data. Thus, to store the totality of data may require three blocks 410. Upon receiving the first of these data, storage device 120 of FIG. 1 might not have any way to know whether to store the data in reclaim unit 420-1 or reclaim unit 420-2. If storage device 120 of FIG. 1 starts storing the data in reclaim unit 420-1, then reclaim unit 420-1 may be full before all the data is received and stored, meaning another reclaim unit 420 may be also needed to store some of the data. But if processor 110 of FIG. 1 informs storage device 120 of FIG. 1 that the total amount of data to be stored is three MB and processor 110 of FIG. 1 would prefer the data to be stored in a single reclaim unit 420, then storage device 120 of FIG. 1 might select reclaim unit 420-2 to store the data rather than reclaim unit 420-1, as there is sufficient space in reclaim unit 420-2 for all three MB. Of course, for storage device 120 of FIG. 1 to select reclaim unit 420 as desired by processor 110 of FIG. 1 assumes that such reclaim unit 420 is available: if all reclaim units 420 of a desired size are used to store data, then storage device 120 of FIG. 1 may need to select reclaim unit 420 that is either smaller or larger than desired (and storage device 120 of FIG. 1 might need to split the data across multiple reclaim units 420).

In some embodiments of the disclosure, storage device 120 of FIG. 1 may support reclaim groups, with each reclaim unit in one reclaim group having one size, and with reclaim units in other reclaim groups having other sizes. Such embodiments of the disclosure may enable processor 110 of FIG. 1 to select a reclaim unit of a particular size by selecting the appropriate reclaim group when sending the write command to the drive. Other embodiments of the disclosure may group reclaim units together based on other properties than the size of the reclaim units. For example, in some embodiments of the disclosure reclaim units may be grouped based on their endurance. For purposes of this discussion, reclaim groups may be called based on the property used to organize reclaim units: thus, for example, reclaim units organized based on endurance may be called endurance groups.

Reclaim units 420 may also be allocated dynamically. That is, rather than having reclaim units 420 defined in advance by storage device 120 of FIG. 1, processor 110 of FIG. 1 may request allocation of a reclaim unit 420. This request to allocate reclaim unit 420 may include, for example, parameters, such as the size of the reclaim unit (which may be defined either in terms of bytes, KB, MB, or gigabytes (GB), or in terms of a number of pages 405, blocks 410, or superblocks 415), and/or whether reclaim unit 420 should be allocated from a continuous sequence of pages 405, blocks 410, or superblocks 415 or if the pages 405, blocks 410, or superblocks 415 that make up reclaim unit 420 may be scattered around storage device 120 (in embodiments of the disclosure where sequential read/write times may be faster than random access read/write times, whether or not reclaim unit 420 is allocated as a continuous range of physical addresses may result in a performance difference, but may also place limits on the pages 405, blocks 410, or superblocks 415 selected to allocate reclaim unit 420).

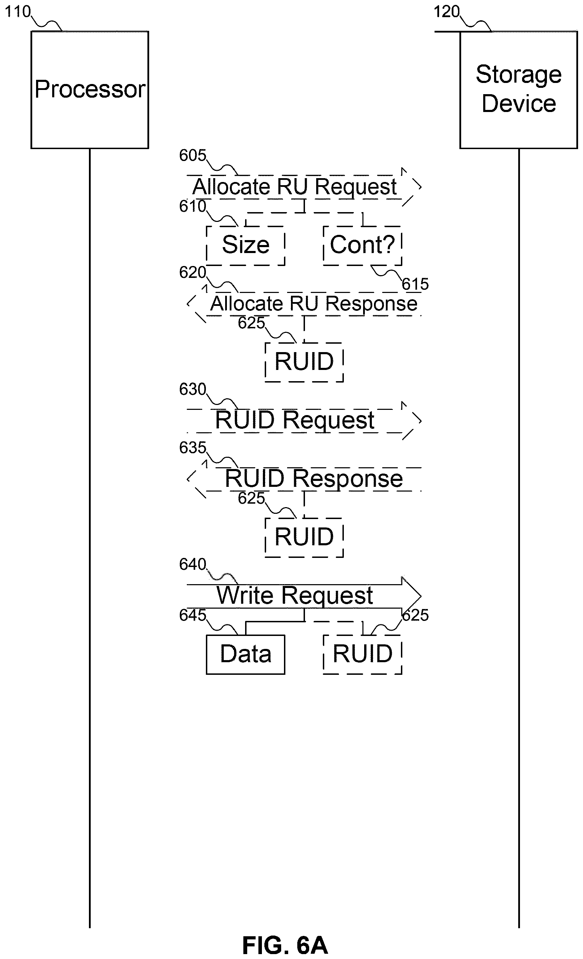

Another parameter that may be attached to a request to allocate reclaim unit 420 may be an assigned reclaim unit identifier. That is, processor 110 of FIG. 1 may specify a particular reclaim unit identifier to be assigned to reclaim unit 420. For purposes of this discussion, the term reclaim unit identifier may be understood to refer to an identifier that identifies a reclaim unit. As discussed with reference to FIGs. 6A-6B below, processor 110 of FIG. 1 assigning the reclaim unit identifier might result in a collision of reclaim unit identifiers, which may require resolution.

In all of the above discussion, there is an implicit assumption that all of flash memory chips 320 are equal. This assumption may often be reasonable. But in some embodiments of the disclosure, flash memory chips 320 might not all be the same. For example, some of flash memory chips 320 might store more data than other flash memory chips 320. Or, some of flash memory chips 320 might be Single Level Cell (SLC) flash memory chips, while others of flash memory chips 320 might be Multi-Level Cell (MLC), Triple Level Cell (TLC), or Quad Level Cell (QLC) flash memory chips. Because different types of storage may offer different latencies and program/erase cycle counts-for example, TLC flash memory chips might have a slower latency than SLC flash memory chips-there may be advantages or disadvantages to using a particular storage technology. Just as processor 110 of FIG. 1 may provide information regarding the size of reclaim unit 420 to be used, processor 110 of FIG. 1 may provide information regarding what storage technology might be preferred to store a particular data. As with variable-sized reclaim units 420, selecting a particular storage technology to store the data may depend on the availability of reclaim units 420 in that storage technology, and reclaim units 420 in other storage technologies may be necessary if the desired storage technology is not available. Other properties, other than latency or program/erase cycle counts, that may differ across different storage media may include endurance, performance, retention, error correction code support, etc.

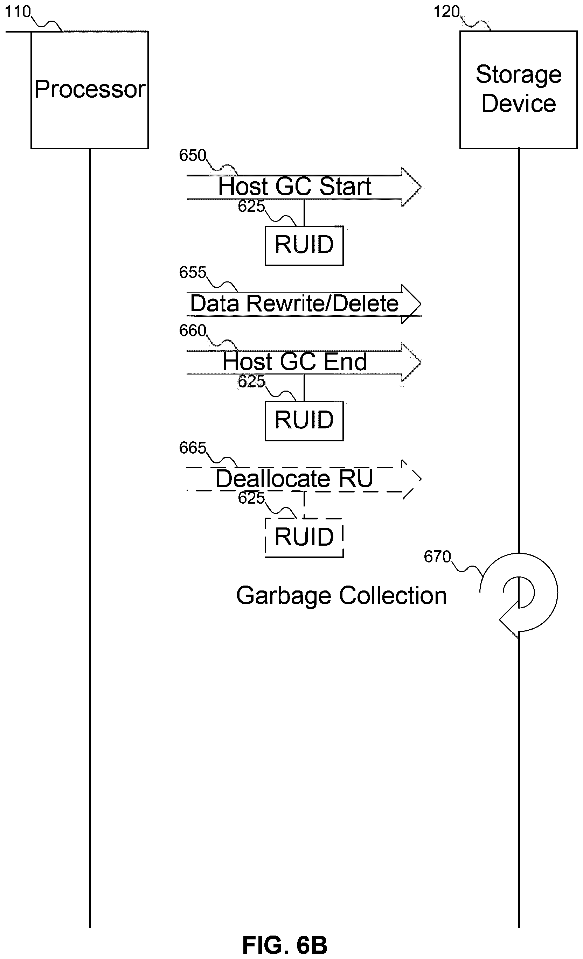

Each reclaim unit 420 may have its own identifier. As discussed with reference to FIGs. 6-7 below, the identifier assigned to a reclaim unit 420 may be assigned by either processor 110 of FIG. 1 or storage device 120 of FIG. 1. Processor 110 of FIG. 1 may then refer to reclaim unit 420 using its identifier.

In FIG. 4, reclaim units 420 are shown as continuous ranges of pages 405. But in some embodiments of the disclosure, reclaim units 420 might not be contiguous ranges of physical addresses in the storage of storage device 120 of FIG. 1. For example, a reclaim unit 420 might include blocks 410-1 and 410-3, but not block 410-2 (assuming that FIG. 4 shows flash memory chips 320 as a continuous range of physical addresses, and assuming a different arrangement of reclaim units 420 than that shown in FIG. 4). In such situations, reclaim units 420 may be thought of as the union of multiple separate reclaim units, each of which is itself includes a continuous physical address range.

FIGs. 6A-6B show processor 110 of FIG. 1 and storage device 120 of FIG. 1 exchanging messages in support of host-managed garbage collection, according to embodiments of the disclosure. In FIG. 6A, processor 110 may send allocate reclaim unit request 605, requesting that storage device 120 allocate reclaim unit 420 of FIG. 4. In some embodiments of the disclosure, processor 110 may include parameters to allocate reclaim unit request 605. For example, processor 110 may specify size 610 of reclaim unit 420 of FIG. 4: that is, how large reclaim unit 420 of FIG. 4 should be when allocated. Note that in some embodiments of the disclosure, size 610 might be only a lower bound on the size of reclaim unit 420 of FIG. 4. For example, assume that each page 405 of FIG. 4 is 4 KB in size, and each block 410 of FIG. 4 includes 256 pages 405 of FIG. 4. In such a situation, each block 410 of FIG. 4 would be 1 MB in size. If size 610 were specified as, say, 1.5 MB, then reclaim unit 420 of FIG. 4 would need 384 pages 405 of FIG. 4 to provide the requested size 610. But since block 410 of FIG. 4 may be smallest unit that may be erased on storage device 120, reclaim unit 420 of FIG. 4 might need two blocks 410 of FIG 4, which would mean that reclaim unit 420 of FIG. 4 might include 512 pages 405 of FIG. 4 to provide the required size 610. (If superblock 415 of FIG. 4 is the smallest unit that may be erased on storage device 120, then the number of pages 405 of FIG. 4 included in reclaim unit 420 of FIG. 4 may be even larger.)

In addition, allocate reclaim unit request 605 may include contiguous flag 615. In some embodiments of the disclosure, reclaim unit 420 of FIG. 4 might be allocated as a contiguous range of physical addresses/pages 405 of FIG. 4/blocks 410 of FIG. 4/superblocks 415 of FIG. 4;, in other embodiments of the disclosure, reclaim unit 420 of FIG. 4 might be allocated as various physical addresses/pages 405 of FIG. 4/blocks 410 of FIG. 4/superblocks 415 of FIG. 4 scattered across flash memory chips 320 of FIG. 3. In implementations of storage device 120 where there is a difference in latency between sequential and random access of data, whether reclaim unit 420 of FIG. 4 is allocated as a contiguous range of physical addresses/pages 405 of FIG. 4/blocks 410 of FIG. 4/superblocks 415 of FIG. 4 or as multiple disconnected physical addresses/pages 405 of FIG. 4/blocks 410 of FIG. 4/superblocks 415 of FIG. 4 may affect the performance of storage device 120. But identifying a contiguous range of physical addresses/pages 405 of FIG. 4/blocks 410 of FIG. 4/superblocks 415 of FIG. 4 may limit where storage device 120 may allocate reclaim unit 420 of FIG. 4, storage device 120 might need to perform garbage collection on various blocks to establish a sufficiently large contiguous range of physical addresses/pages 405 of FIG. 4/blocks 410 of FIG. 4/superblocks 415 of FIG. 4 to support allocation of reclaim unit 420 of FIG. 4. Contiguous flag 615 may specify which of these alternatives is preferred for reclaim unit 420 of FIG. 4 being allocated using allocate reclaim unit request 605.

Another parameter processor 110 may include with allocate reclaim unit request 605 is a reclaim unit identifier (not shown in FIG. 6A). That is, processor 110 may select a reclaim unit identifier to be used to identify reclaim unit 420 of FIG. 4 to be allocated by storage device 120. As discussed below, if processor 110 selects the reclaim unit identifier, there may be a collision of reclaim unit identifiers, which may require resolution. One example resolution may be for storage device 120 to return an error to processor 110 in response to the command including the conflicting identifier. Another example resolution may be for storage device 120 to remap one of the two identifiers in the collision. This remapping may optionally be logged for a later query by processor 110.

Once storage device 120 has allocated reclaim unit 420 of FIG. 4, storage device 120 may send allocate reclaim unit response 620 to processor 110. Storage device 120 may also assign reclaim unit identifier 625 to reclaim unit 420 of FIG. 4 and may include reclaim unit identifier 625 with allocate reclaim unit response 620, so that processor 110 may use reclaim unit identifier 625 to identify reclaim unit 420 of FIG. 4 in later messages. In embodiments of the disclosure where processor 110 selects reclaim unit identifier 625 to be used to identify reclaim unit 420 of FIG. 4, allocate reclaim unit response 620 may omit reclaim unit identifier 625 (since processor 110 already knows reclaim unit identifier 625).

In some embodiments of the disclosure, storage device 120 may manage the allocation of reclaim units 420 of FIG. 4, without processor 110 needing to send allocate reclaim unit request 605. In such embodiments of the disclosure, allocate reclaim unit request 605 and/or allocate reclaim unit response 620 may be omitted, as shown by their representation using dashed lines.

In some embodiments of the disclosure, such as embodiments of the disclosure where processor 110 does not send allocate reclaim unit request 605 or receive allocate reclaim unit response 620, processor 110 may send reclaim unit identifier request 630 to storage device 120. Reclaim unit identifier request 630 may be a request for reclaim unit identifier 625 that identifies reclaim unit 420 of FIG. 4, which may be returned as part of reclaim unit identifier response 635. Reclaim unit identifier request 630 may take the form of a request for storage device 120 to assign a new reclaim unit identifier 625 to reclaim unit 420 of FIG. 4, or it may include a request for a log page from storage device 120 that may include a list of all reclaim unit identifiers 625 (present and/or past) that have been written to by processor 110. Note that in some embodiments of the disclosure, processor 110 of FIG. 1 might not request reclaim unit identifier 625 from storage device 120, which is why reclaim unit identifier request 630 and reclaim unit identifier response 635 are shown with dashed lines.

At some point, processor 110 may send write request 640 to storage device 120. Write request 640 may be a request to write data 645 to storage device 120. Write request 640 may include reclaim unit identifier 625: in some embodiments of the disclosure, reclaim unit identifier 625 may be omitted (for example, in embodiments of the disclosure where storage device 120 assigns data 645 to a particular reclaim unit 420 of FIG. 4). Write request 640 may also include additional information not shown in FIG. 6A: for example, a logical address associated with the data by processor 110.

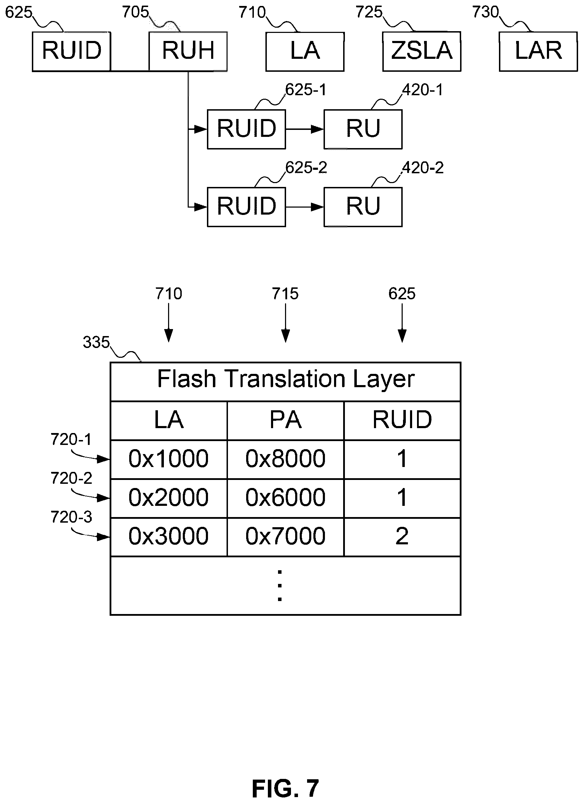

Note that there is a difference between the logical address and reclaim unit identifier 625: the logical address may be how processor 110 identifies the particular data, whereas reclaim unit identifier 625 may identify in which reclaim unit 420 of FIG. 4 processor 110 would like the data to be stored. In embodiments of the disclosure where a logical address may be used as reclaim unit identifier 625 (discussed further with reference to FIG. 7 below), write request 640 may actually include two logical addresses: one used by processor 110 to identify data 645, and one used by storage device 120 to determine into which reclaim unit 420 of FIG. 4 data 645 should be written.

While FIG. 6A shows processor 110 sending only one write request 640 to storage device 120, embodiments of the disclosure may include processor 110 sending any number (one or more) write requests 640 to storage device 120, which may be associated with any number (one or more) different reclaim unit identifiers 625.

Turning to FIG. 6B, at some point, processor 110 may send host garbage collection start message 650 to storage device 120. Host garbage collection start message 650 may inform storage device 120 that processor 110 will manage garbage collection of reclaim unit 420 of FIG. 4 identified by reclaim unit identifier 625. Alternatively, host garbage collection start message 650 may be understood as requesting that storage device 120 prioritize garbage collection of other reclaim units 420 of FIG. 4 than the reclaim unit 420 of FIG. 4 identified by reclaim unit identifier 625. In such embodiments of the disclosure, host garbage collection start message 650 might not necessarily indicate that processor 110 is going to perform garbage collection on reclaim unit 420 of FIG. 4 identified by reclaim unit identifier 625, although a well-behaved host would be expected to only send host garbage collection start message 650 if processor 110 is actually going to perform garbage collection on reclaim unit 420 of FIG. 4 identified by reclaim unit identifier 625 or if processor 110 expects reclaim unit 420 of FIG. 4 identified by reclaim unit identifier 625 to be deallocated relatively soon.

Upon receiving host garbage collection start message 650, storage device 120 may know not to perform garbage collection of reclaim unit 420 of FIG. 4 identified by reclaim unit identifier 625, as processor 110 of FIG. 1 will manage garbage collection. For example, storage device 120 may use garbage collection priority unit 340 of FIG. 3 to assign a low priority 505 of FIG. 5 to reclaim unit 420 of FIG. 4 identified by reclaim unit identifier 625, so that storage device 120 may try and avoid performing garbage collection on reclaim unit 420 of FIG. 4 identified by reclaim unit identifier 625.

Processor 110 may then issue requests 655 for storage device 120 to program or delete (deallocate) pages from reclaim unit 420 of FIG. 4 identified by reclaim unit identifier 625. To program data from reclaim unit 420 of FIG. 4 identified by reclaim unit identifier 625, processor 110 might issue a request to read data for the logical address associated with the data in page 405 of FIG. 4 of reclaim unit 420 of FIG. 4 identified by reclaim unit identifier 625, and then may issue a write request to write that data associated with a new logical block address to storage device 120, which may then store the data in a new page 405 of FIG. 4 (and potentially in a new reclaim unit 420 of FIG. 4), after which the data in the original page 405 of FIG. 4 may be deleted. This process of reading the data from reclaim unit 420 of FIG. 4 identified by reclaim unit identifier 625 to another reclaim unit 420 of FIG. 4 may be described as a rewrite process, as the data is (potentially) not being modified when rewritten: the rewrite may be just to permit deallocation of reclaim unit 420 of FIG. 4 identified by reclaim unit identifier 625. Similarly, to delete data from page 405 of FIG. 4 of reclaim unit 420 of FIG. 4 identified by reclaim unit identifier 625, processor 110 might issue delete requests for the logical address associated with the data in page 405 of FIG. 4 of reclaim unit 420 of FIG. 4 identified by reclaim unit identifier 625 to storage device 120. While FIG. 6B shows only one request 655, embodiments of the disclosure may include processor 110 issuing any number of such requests. Processor 110 might even issue no requests 655: for example, if processor 110 wants to delete all the data in reclaim unit 420 of FIG. 4 identified by reclaim unit identifier 625, processor 110 might simply leave all data in place, and send a request (such as a request to deallocate reclaim unit 420 of FIG. 4, discussed below) to storage device 120 that storage device 120 should deallocate reclaim unit 420 of FIG. 4 identified by reclaim unit identifier 625, which may involve deleting all data in reclaim unit 420 of FIG. 4 identified by reclaim unit identifier 625.

When processor 110 has finished managing garbage collection of reclaim unit 420 of FIG. 4 identified by reclaim unit identifier 625, processor 110 may send host garbage collection end message 660 to storage device 120. Host garbage collection end message 660 may inform storage device 120 that processor 110 has finished managing garbage collection of reclaim unit 420 of FIG. 4 identified by reclaim unit identifier 625. Processor 110 may also send deallocate reclaim unit request 665 to storage device 120, requesting that storage device 120 deallocate reclaim unit 420 of FIG. 4 identified by reclaim unit identifier 625. In some embodiments of the disclosure, storage device 120 may assume that processor 110 may continue to use reclaim unit 420 of FIG. 4 identified by reclaim unit identifier 625 until processor 110 explicitly requests that reclaim unit 420 of FIG. 4 identified by reclaim unit identifier 625 be deallocated. But in other embodiments of the disclosure, deallocate reclaim unit request 665 may be implied by processor 110 ending its management of garbage collection of reclaim unit 420 of FIG. 4 identified by reclaim unit identifier 625. In such embodiments of the disclosure, deallocate reclaim unit request 665 may be omitted, as shown by deallocate reclaim unit request 665 and reclaim unit identifier 625 having dashed lines. In yet other embodiments of the disclosure, the roles of host garbage collection end message 660 and deallocate reclaim unit request 665 may be reversed: processor 110 may send deallocate reclaim unit request 665, which may implicitly indicate that processor 110 has completed host-managed garbage collection of reclaim unit 420 of FIG. 4 identified by reclaim unit identifier 625 (in which case host garbage collection end message 660 may be omitted).

Whether or not processor 110 has (explicitly or implicitly) requested that reclaim unit 420 of FIG. 4 identified by reclaim unit identifier 625 be deallocated, at this point storage device 120 may perform garbage collection 670 on reclaim unit 420 of FIG. 4 identified by reclaim unit identifier 625.

If deallocation of reclaim unit 420 of FIG. 4 identified by reclaim unit 625 is to be performed (for example, if processor 110 explicitly sends deallocate reclaim unit request 665, or if deallocate reclaim unit request 665 is implied by host garbage collection end message 660, storage device 120 may attempt to deallocate reclaim unit 420 identified by reclaim unit identifier 625. In some embodiments of the disclosure, storage device 120 may take processor 110 at its word, treating deallocate reclaim unit request 665 as a request to deallocate reclaim unit 420 of FIG. 4 identified by reclaim unit identifier 625 regardless of whether there might still be valid data in reclaim unit 420 of FIG. 4 identified by reclaim unit identifier 625. That is, storage device 120 may interpret deallocate reclaim unit request 665 as both a request to deallocate reclaim unit 420 of FIG. 4 identified by reclaim unit identifier 625 and as a request to delete any valid data remaining in reclaim unit 420 of FIG. 4 identified by reclaim unit identifier 625. Storage device 120 may optionally return an informational message informing processor 110 of any LBAs that contained valid data that were deallocated by storage device 120 in executing deallocate reclaim unit request 665.

In other embodiments of the disclosure, storage device 120 may take a more conservative approach, and may request that processor 110 confirm that any valid data remaining in reclaim unit 420 of FIG. 4 identified by reclaim unit identifier 625 is to be deleted. Storage device 120 may determine the logical addresses of these data using flash translation layer 335 of FIG. 3 to identify what data is stored in reclaim unit 420 of FIG. 4 identified by reclaim unit identifier 625, as discussed with reference to FIG. 7 below. Storage device 120 may then send a message to processor 110, providing the list of logical block addresses still storing valid data in reclaim unit 420 identified by reclaim unit identifier 625 to processor 110. Once processor 110 has confirmed that all remaining valid data in reclaim unit 420 of FIG. 4 identified by reclaim unit identifier 625 are to be deleted, storage device 120 may delete the remaining data in reclaim unit 420 of FIG. 4 identified by reclaim unit identifier 625, and may then deallocate reclaim unit 420 of FIG. 4. (Obviously, if processor 110 indicates that some of the data remaining in reclaim unit 420 of FIG. 4 identified by reclaim unit identifier 625 should continue to be stored by storage device 120, then storage device 120 should not deallocate reclaim unit 420 of FIG. 4 identified by reclaim unit identifier 625 at this time, to enable processor 110 to move such data into other reclaim units 420 of FIG. 4. Then, once reclaim unit 420 of FIG. 4 identified by reclaim unit identifier 625 only contains data that may be deleted, processor 110 may again send deallocate reclaim unit request 665. Alternatively, processor 110 might read the remaining valid data in reclaim unit 420 of FIG. 4 identified by reclaim unit identifier 625 and write that data to other reclaim unit(s) 420 of FIG. 4 (in effect, performing garbage collection from processor 110). Storage device 120 might once again confirm that all remaining valid data in reclaim unit 420 of FIG. 4 identified by reclaim unit identifier 625 should be deleted, but at this point processor 110 should be able to confirm that reclaim unit 420 of FIG. 4 identified by reclaim unit identifier 625 may now be deallocated.)

There may even be situations where processor 110 might request that storage device 120 not perform garbage collection on reclaim unit 420 of FIG. 4, even though processor 110 might have no intention of performing garbage collection itself. For example, consider the situation where processor 110 is using reclaim unit 420 of FIG. 4 as a queue of some sort (for example, a first in, first out (FIFO) queue or a last in, first out (LIFO) queue). Processor 110 might know that the queue will not be needed soon, and might request that storage device 120 deprioritize performing garbage collection on reclaim unit 420 of FIG. 4. Processor 110 may then finish consuming the data in the queue, after which processor 110 may send deallocate reclaim unit request 665 to deallocate reclaim unit 420 of FIG. 4. Note that consuming the remaining data in the queue might not be considered performing garbage collection: the data is being processed, but neither is the data being rewritten to a new reclaim unit.

As discussed above, request 630 and response 635 may be omitted. In some embodiments of the disclosure, storage device 120 may provide reclaim unit identifier 625 automatically to processor 110, without involving a request/response pair. For example, in some embodiments of the disclosure, when storage device 120 processes write request 640, storage device 120 might include reclaim unit identifier 625 in a response sent to processor 110 to report that write request 640 was successfully completed. In other embodiments of the disclosure, storage device 120 may send an Asynchronous Event Request (AER) or Asynchronous Event Notification (AEN) to processor 110 regarding each reclaim unit 420 of FIG. 4: this AER/AEN may include reclaim unit identifier 625, or enough information to trigger processor 110 to query the reason for the AER/AEN and thus discover reclaim unit identifier 625 (and perhaps other related information to initiate a debug) during the querying process. Storage device 120 may send this AER/AEN when data is first written to reclaim unit 420 (that is, when the first page 405 of FIG. 4 that is considered part of reclaim unit 420 is written to), or when data is last written to reclaim unit 420 (that is, when the last page 405 of FIG. 4 that is considered part of reclaim unit 420 is written to).

But in embodiments of the disclosure where storage device 120 returns the AER/AEN only when reclaim unit 420 of FIG. 4 is full, the question might arise how processor 110 may include reclaim unit identifier 625 as part of write request 640. The answer is that in such embodiments of the disclosure, write request 640 might not include reclaim unit identifier 625.

But this may lead to another question: if storage device 120 only returns the AER/AEN when reclaim unit 420 is full, and storage device 120 might place data in different reclaim units 420 of FIG. 4 (for example, storage device 120 might store data from different applications in different reclaim units 420 of FIG. 4), how might processor 110 know what data is in what reclaim unit 420 of FIG. 4, so that processor 110 may manage garbage collection on reclaim unit 420 of FIG. 4? The answer is that processor 110 may query storage device 120 for information about a particular reclaim unit 420 of FIG. 4 associated with reclaim unit identifier 625. In response to such a query, storage device 120 may return information about what logical addresses (which are known to processor 110) are stored a particular reclaim unit 420 of FIG. 4. This information may be returned, for example, in a log page (in which case processor 110 may send a request/query for the log page that contains that information).

As discussed with reference to FIG. 3 below, storage device 120 may include flash translation layer 335 of FIG. 3. Flash translation layer 335 of FIG. 3 may associate a logical address provided by processor 110 with a physical address on flash memory chips 320 of FIG. 3 where data 645 is actually stored. Flash translation layer 335 of FIG. 3 is discussed further with reference to FIG. 7 below; in short, flash translation layer 335 of FIG. 3 may also associate the logical address provided by processor 110 with reclaim unit identifier 625, which may enable efficient determination of what logical addresses are stored in a particular reclaim unit 420 of FIG. 4 identified by reclaim unit identifier 625.

In embodiments of the disclosure where storage device 120 assigns reclaim unit identifier 625 to reclaim unit 420 of FIG. 4, storage device 120 may also support reclaim unit handles. Reclaim unit handles may function similarly to file descriptors in a file system: reclaim unit handles may be a unique identifier for a particular reclaim unit 420 of FIG. 4. Reclaim unit handles therefore offer an alternative mechanism for identifying reclaim units 420 of FIG. 4. Note that while reclaim unit identifiers 625 may be unique for each reclaim unit 420 of FIG. 4 (that is, each reclaim unit 420 of FIG. 4 may have a unique reclaim unit identifier 625), reclaim unit handles may be opened for a particular reclaim unit 420 of FIG. 4 (to support access to that reclaim unit 420 of FIG. 4) and closed when access is complete. In other words, reclaim unit handles may be reused for different reclaim units 420 of FIG. 4. In some embodiments of the disclosure, reclaim unit handles may be used to access multiple reclaim units 420 of FIG. 4 at one time (effectively treating the set of reclaim units 420 of FIG. 4 as a "super" reclaim unit, much like a superblock includes multiple blocks).

When supporting reclaim unit handles, storage device 120 may support several different configurations. Storage device 120 may support any number (one or more) of different configurations, each of which may include some number of handles. Processor 110 may select a particular configuration to gain access to the supported number of reclaim unit handles in that configuration. Note that the number of reclaim unit handles may be less than the number of reclaim units 420 of FIG. 4. In some embodiments of the disclosure, the number of reclaim unit handles associated with a particular configuration of storage device 120 may be fixed and may not be increased: processor 110 may then have to function with the supported number of reclaim unit handles (and may need to close some reclaim unit handles to access data in other reclaim units 420 of FIG. 4). Reclaim unit handles may be shared across namespaces, which may support sharing of data between applications in embodiments of the disclosure that isolate access to individual reclaim units 420 of FIG. 4.

As noted above and discussed further with reference to FIG. 7 below, flash translation layer 335 of FIG. 3 may associate a logical address with reclaim unit identifier 625. As a consequence, processor 110 may provide a logical address, and storage device 120 may be able to identify reclaim unit identifier 625 from that logical address, using flash translation layer 335 of FIG. 3. This fact means that in some embodiments of the disclosure, the logical address may be used as reclaim unit identifier 625: given the logical address, storage device 120 may identify reclaim unit identifier 625 and may then process the request/command as though processor 110 had provided reclaim unit identifier 625.

In yet other embodiments of the disclosure, processor 110 may select reclaim unit identifier 625. That is, rather than storage device 120 selecting reclaim unit identifier 625 and assigning the selected reclaim unit identifier 625 to reclaim unit 420 of FIG. 4, processor 110 may provide reclaim unit identifier 625, and storage device 120 may simply assign that reclaim unit identifier 625 to reclaim unit 420.

This approach, however, may have a potential difficulty. Assume, for example, that reclaim unit identifier "1" has already been used as reclaim unit identifier 625 for some reclaim unit 420 of FIG. 4, and processor 110 of FIG. 1 selects reclaim unit identifier "1" for the data it wants stored on storage device 120. (This situation might arise, for example, if processor 110 is executing multiple applications or virtual machines, each of which might independently select reclaim unit identifiers, or if multiple processors 110 are communicating with storage device 120, as might happen when storage device 120 is part of a storage system that is accessible from a network of other machines 105 of FIG. 1.) Because reclaim unit identifier 625 is being used to identify different reclaim units 420 of FIG. 4, a collision has occurred.

There are several ways to resolve such a collision. One solution is for storage device 120 to inform processor 110 that reclaim unit identifier 625 selected by processor 110 is already in use, and that processor 110 should select another reclaim unit identifier 625. Another solution is to assume that the reuse of reclaim unit identifier 625 means that processor 110 is no longer interested in the data associated with the earlier reclaim unit identifier 625, and storage device 120 may invalidate and garbage collect reclaim unit 420 of FIG. 4 associated with reclaim unit identifier 625. Yet another solution is for storage device 120 to somehow add an identifier of processor 110 (or the application or virtual machine running on processor 110) to reclaim unit identifier 625, or for storage device 120 to select and use a non-conflicting reclaim unit identifier 625 instead of the reclaim unit identifier 625 provided by processor 110 that conflicts with another reclaim unit identifier 625. Finally, storage device 120 may return an error, letting processor 110 know that reclaim unit identifier 625 conflicts with an existing reclaim unit identifier: processor 110 may then select another reclaim unit identifier 625 and resubmit the request that resulted in the error response.

All of these solutions offer advantages and disadvantages. Asking processor 110 to select a new reclaim unit identifier 625 enables the use of reclaim unit identifiers 625 as provided, without needing to add any additional layers to the handling of reclaim unit identifiers 625. But this solution also lets processor 110 know that there is data stored on storage device 120 that is associated with a particular reclaim unit identifier 625: if processor 110 is attempting to perform any malicious activity, this information might reveal information to processor 110 that would be better kept from processor 110. Asking processor 110 to select a new reclaim unit identifier 625 may also add additional time for storage device 120 to complete write request 640, which may add delay to processor 110 being able to execute its instructions.

Assuming that the reuse of reclaim unit identifier 625 implies that the data stored in reclaim unit 420 of FIG. 4 associated with reclaim unit identifier 625 may be deleted safely may avoid any delay on the part of processor 110, and may expedite the recovery of free pages 405 (as reclaim unit 420 of FIG. 4 associated with reclaim unit identifier 625 may now be deallocated). But if processor 110 accidentally reused reclaim unit identifier 625, then data processor 110 wanted to keep may be lost. Even worse, if reclaim unit identifier 625 was used by another processor 110 of another machine 105 of FIG. 1 or by another virtual machine running on processor 110, then processor 110 might not have even known that reclaim unit identifier 625 was already in use, again resulting in the accidental deletion of data that should have been kept.

Adding an identifier of processor 110, or an application or virtual machine running on processor 110, to reclaim unit identifier 625 may avoid the disadvantages of the other solutions: processor 110 may remain unaware that reclaim unit identifier 625 was already in use, and data may not be accidentally deleted be reusing reclaim unit identifier 625. But combining reclaim unit identifier 625 with some identifier of processor 110 or an application or virtual machine running on processor 110, adds an additional layer of operational management: reclaim unit identifier 625 might need to be modified to combine it with this other identifier before reclaim unit identifier 625 may be used to identify reclaim unit 420 of FIG. 4. This additional layer of management may therefore result in storage device 120 needing some additional time before processing any particular request from processor 110.

Finally, all of the above discussion operates on the assumption that processor 110 will manage garbage collection of reclaim unit 420 correctly: that is, that processor 110 is well-behaved. A well-behaved processor 110 may send host garbage collection start message 650 shortly before processor 110 begins its garbage collection of reclaim unit 420 of FIG. 4, and may send host garbage collection end message 660 when processor 110 finishes its garbage collection of reclaim unit 420 of FIG. 4. But a poorly behaved processor 110 might not operate in this manner. For example, a poorly-behaved processor 110 might send write request(s) 640 to storage device 120, and immediately send host garbage collection start message 650 to prevent storage device 120 from performing garbage collection on reclaim unit 420 of FIG. 4 identified by reclaim unit identifier 625. But poorly-behaved processor 110 might have no intention of performing host-managed garbage collection of reclaim unit 420 of FIG. 4 identified by reclaim unit identifier 625 in the near future, or possibly even at all. Or, poorly-behaved processor 110 might be well-behaved in general, but might forget to send or delay sending host garbage collection end message 660 to inform storage device 120 that storage device 120 may now perform garbage collection on reclaim unit 420 of FIG. 4 identified by reclaim unit identifier 625. In other words, poorly-behaved processor 110 might prevent storage device 120 from performing garbage collection on reclaim unit 420 of FIG. 4 identified by reclaim unit identifier 625 when poorly-behaved processor 110 should not do so. How storage device 120 may handle a poorly-behaved processor 110 is discussed further with reference to FIG. 8 below.

Even if processor 110 is well-behaved, there may be situations where storage device 120 might select reclaim unit 420 of FIG. 4 identified by reclaim unit identifier 625 for garbage collection, even though processor 110 might have indicated that reclaim unit 420 of FIG. 4 identified by reclaim unit identifier 625 is subject to host-managed garbage collection and processor 110 is well-behaved. For example, the number of free pages 405 of FIG. 4 might be sufficiently low that storage device 120 might select reclaim unit 420 of FIG. 4 for garbage collection, despite processor 110 having indicated that reclaim unit 420 of FIG. 4 identified by reclaim unit 625 is subject to host-managed garbage collection. Such exceptions (so-called because they happen despite processor 110 indicating that it will manage garbage collection of reclaim unit 420 of FIG. 4 identified by reclaim unit identifier 625) may occur even though processor 110 is well-behaved.

FIG. 7 shows various different ways in which reclaim units 420 of FIG. 4 may be identified, according to embodiments of the disclosure. As discussed with reference to FIGs. 6A-6B above, processor 110 of FIG. 1 may use reclaim unit identifier 625 to identify reclaim unit 420 of FIG. 4, or reclaim unit handle 705 to identify reclaim unit(s) 420 of FIG. 4. As shown in FIG. 7, reclaim unit handle 705 may be associated with multiple reclaim unit identifiers 625, each of which may identify reclaim units 420, which shows that reclaim unit handle 705 may be used to identify multiple reclaim units 420. (While FIG. 7 shows reclaim unit handle 705 being associated with reclaim unit identifiers 625 which in turn are associated with reclaim units 420, embodiments of the disclosure may bypass reclaim unit identifiers 625 and directly associate reclaim unit handle 705 with reclaim units 420.)

Also, as discussed above, processor 110 of FIG. 1 may use logical address 710 to identify reclaim unit 420. To support this, flash translation layer 335 is shown. In flash translation layer, logical address 710 may be associated with physical address 715 and reclaim unit identifier 625. That is, given a particular logical address 710, the corresponding physical address 715 where the data is stored on storage device 120 of FIG. 1 may be determined from flash translation layer 335, as well as reclaim unit identifier 625. Thus, if processor 110 of FIG. 1 provides logical address 710, storage device 120 may use logical address 710 to determine reclaim unit identifier 625 from flash translation layer 335. Put another way, logical address 710 may be used to identify reclaim unit 420 in a manner, as logical address 710 may be used to determine reclaim unit identifier 625. For example, FIG. 7 shows flash translation layer 335 as including three entries 720-1 through 720-3 (which may be referred to collectively as entries 720). Entry 720-1 indicates that the data associated with logical address 0x1000 is stored at physical address 0x8000 that is part of reclaim unit identifier 1, entry 720-2 indicates that the data associated with logical address 0x2000 is stored at physical address 0x6000 that is part of reclaim unit identifier 1, and entry 720-3 indicates that data associated with logical address 0x3000 is stored at physical address 0x7000 that is part of reclaim unit identifier 2. Entries 720 are merely examples, and any logical address 710 might be associated with any physical address 715 and/or any reclaim unit identifier 625. In addition, while FIG. 7 shows flash translation layer 335 as including three entries 720, embodiments of the disclosure may support flash translation layer 335 as including any number (zero or more) of entries 720.

In some embodiments of the disclosure, flash translation layer 335 may use some other way to identify reclaim unit 420 of FIG. 4 instead of reclaim unit identifier 625. For example, the physical address 715 that represents the start of the physical address range for reclaim unit 420 of FIG. 4 may be used instead of reclaim unit identifier 625. Even in situations where reclaim units 420 of FIG. 4 are not continuous, the base physical address for reclaim units 420 may uniquely identify each reclaim unit 420.

In some embodiments of the disclosure, zone namespaces may be used to manage where data is stored on storage device 120 of FIG. 1. In such embodiments of the disclosure, zones may be considered analogous to reclaim units, and zone namespace logical address 725 may be used to identify reclaim unit 420. In some embodiments of the disclosure, key-value or object storage may be used to manage where data is stored on the storage device. In such embodiments of the disclosure, values or objects may be considered analogous to reclaim units, and keys or object identifiers may be used to identify reclaim units.

Finally, in some embodiments of the disclosure, instead of providing logical address 710, processor 110 of FIG. 1 may provide logical address range 730. Logical address range 730 may be a range of logical addresses, rather than a single logical address 710. (Of course, in the most general sense, a single logical address 710 may be thought of as a logical address range 730 that includes only one logical address.) Depending on how logical address range 730 is being used, storage device 120 of FIG. 1 may respond in various ways. In some situations, processor 110 of FIG. 1 might provide logical address range 730 to storage device 120 of FIG. 1. as identifying a range of logical addresses to be stored in a single reclaim unit 420. In this situation, logical address range 730 may be considered information that storage device 120 of FIG. 1 may use to select reclaim unit 420 to store data for processor 110 of FIG. 1, and storage device 120 of FIG. 1 may store logical address range 730 (for example, in storage 345 of FIG. 3) and associate it with reclaim unit 420. In other situations, processor 110 of FIG. 1 might provide logical address range 730 to storage device 120 of FIG. 1 as a request to identify which reclaim unit(s) 420 are used to store those logical addresses. Storage device 120 may then use logical address range 730 to identify which reclaim unit(s) 420 store data in those logical addresses (using flash translation layer 335) and may return reclaim unit identifier(s) 625 that identify reclaim unit(s) 420 storing data associated with logical addresses in logical address range 730.

Embodiments of the disclosure may use any of reclaim unit handle 705, logical address 710, zone start logical address 725, and/or logical address range 730 instead of reclaim unit identifier 625. In other words, any discussion regarding using reclaim unit identifier 625 may be replaced with any of these alternative identifiers, without loss of generality.

FIG. 8 shows storage device 120 of FIG. 1 performing garbage collection of reclaim unit 420 of FIG. 4, according to embodiments of the disclosure. In FIG. 8, it may be assumed that storage device 120 has selected reclaim unit 420 of FIG. 4 identified by reclaim unit identifier 625 for garbage collection, even though processor 110 may have indicated that reclaim unit 420 of FIG. 4 identified by reclaim unit identifier 625 is subject to host-managed garbage collection. Storage device 120 may select reclaim unit 420 of FIG. 4 identified by reclaim unit identifier 625 for garbage collection for a number of reasons. For example, processor 110 might be a poorly-behaved processor, indicating that it would manage garbage collection of reclaim unit 420 of FIG. 4 identified by reclaim unit identifier 625 but not doing so. Or, storage device 120 might find that it is critically low on free pages 405, and may need to erase reclaim unit 420 of FIG. 4 identified by reclaim unit identifier 625 even while processor 110 is managing garbage collection of reclaim unit 420 of FIG. 4 identified by reclaim unit identifier 625. Other reasons why storage device 120 might decide to perform garbage collection on reclaim unit 420 of FIG. 4 identified by reclaim unit identifier 625 even while processor 110 is managing garbage collection of reclaim unit 420 of FIG. 4 identified by reclaim unit identifier 625 may include media integrity issues. For example, some storage devices may be subject to read disturb. Read disturb may occur when reading data in one page 405 of FIG. 4 may affect the value stored in a nearby page 405 of FIG. 4. While a small number of reads of one page 405 of FIG. 4 might not affect nearby pages significantly (particularly if storage device 120 supports error correction), as the number of reads of page 405 of FIG. 4 occur, the higher the likelihood that a nearby page 405 of FIG. 4 may be subject to read disturb. The typical solution to read disturb is to read the data from the affected page 405 of FIG. 4 and write the data into a new page 405 of FIG. 4 (and invalidating the old page 405, so that when data is next read from that page 405 of FIG. 4, the effect of read disturb is reset). But since the solution to read disturb may be to program the data into a new page 405 of FIG. 4, some modification of reclaim unit 420 of FIG. 4 may occur, which may affect how processor 110 may perform host-managed garbage collection of reclaim unit 405 of FIG. 4 identified by reclaim unit identifier 625.

Another media integrity issue that may trigger storage device 120 to perform garbage collection on reclaim unit 405 of FIG. 4 identified by reclaim unit identifier 625 may be a retention timer. While under ideal circumstances a storage device 120 might be expected to store data indefinitely without problem, the real world might not be ideal, and there might be an upper limit on how long data may be stored without risk of data corruption. A retention timer may track how long the data has been stored in a block 410 of FIG. 4. The longer data is stored without being moved, the greater the chance that the data may become corrupted, potentially to the point that error correction might not be possible. Therefore, when the retention timer for block 410 of FIG. 4 reaches a predetermined threshold, storage device 120 might decide that the data in block 410 of FIG. 4 should be programmed into a new block. As with read disturb, this programming of data into a new block 410 of FIG. 4 may affect processor 110 if processor 110 is performing host-managed garbage collection of reclaim unit 405 of FIG. 4 identified by reclaim unit identifier 625.

Yet another media integrity issue that may trigger storage device 120 to perform garbage collection on reclaim unit 405 of FIG. 4 identified by reclaim unit identifier 625 may be an open block timer. In some implementations, a storage device 120 may keep block 410 of FIG. 4 open until it is full: that is, until all pages 405 of FIG. 4 in block 410 of FIG. 4 have been written with data. But keeping block 410 of FIG. 4 open indefinitely might result in the potential for data corruption in data already written to block 410 of FIG. 4, much like the retention timer discussed above. Therefore, when block 410 of FIG. 4 has been open for a predetermined threshold, storage device 120 might decide that the data in block 410 of FIG. 4 should be programmed into a new block. As with read disturb, this programming of data into a new block 410 of FIG. 4 may affect processor 110 if processor 110 is performing host-managed garbage collection of reclaim unit 405 of FIG. 4 identified by reclaim unit identifier 625.

Regardless of the particular media integrity issue that might cause storage device 120 to decide to perform garbage collection on block 410 of FIG. 4/reclaim unit 420 of FIG. 4 identified by reclaim unit identifier 625, the net result is that the data processor 110 might want to program to a new reclaim unit 420 of FIG. 4 (or just to delete outright) might have been moved to a new block 410 of FIG. 4/reclaim unit 420 of FIG. 4. The fact that storage device 120 might have moved data from reclaim unit 420 of FIG. 4 identified by reclaim unit identifier 625 might impact how processor 110 may perform host-managed garbage collection. Therefore, it may be important for storage device 120 to notify processor 110 when storage device 120 selects reclaim unit 420 of FIG. 4 identified by reclaim unit identifier 625 for garbage collection, particularly when processor 110 has indicated it wants to manage garbage collection of reclaim unit 420 of FIG. 4 identified by reclaim unit identifier 625.

Storage device 120 may perform garbage collection of reclaim unit 420 of FIG. 4 identified by reclaim unit identifier 625 just as it would if reclaim unit 420 of FIG. 4 identified by reclaim unit identifier 625 was not subject to host-managed garbage collection by processor 110. That is, storage device 120 may program valid data from reclaim unit 420 of FIG. 4 identified by reclaim unit identifier 625 into a new reclaim unit 420 of FIG. 4 and may erase any blocks 410 of FIG. 4 in reclaim unit 420 of FIG. 4 when all valid data in reclaim unit 420 of FIG. 4 has been programmed. But storage device 120 may also send garbage collection message 805 to processor 110, and may include reclaim unit identifier 625 to inform processor 110 which reclaim unit 420 of FIG. 4 identified by reclaim unit identifier 625 is subject to garbage collection by storage device 120. As part of performing garbage collection on reclaim unit 420 of FIG. 4, storage device 120 may log the logical addresses 710 containing data that was programmed into a new reclaim unit 420. Storage device 120 may also log what the original reclaim unit identifier 625 was and what the new reclaim unit identifier 625 is. If all data is programmed from the same original reclaim unit 420 of FIG. 4 into the same new reclaim unit 420 of FIG. 4, then such information might be known implicitly. But since storage device 120 might program data from multiple different reclaim units 420 of FIG. 4, storage device 120 might keep the original and new reclaim unit identifiers 625 in the log, so that storage device 120 (and processor 110) may know what reclaim units 420 of FIG. 4 (both source and destination) have been affected by garbage collection by storage device 120.

Log page 810 shows an example of such a log page. In log page 810, three entries 815-1 through 815-3 are shown (which may be referred to collectively as entries 815). Each entry 815 shows logical address 710 of the data being moved, original reclaim unit identifier 625 where the data was originally stored, and new reclaim unit identifier 625 where the data has been programmed.

Log page 810 shows three entries 815. But embodiments of the disclosure may include any number (zero or more) of entries 815. In addition, storage device 120 does not need to keep entries 815 indefinitely: entries 815 may be removed from log page 810 once processor 110 has been notified about which logical addresses 710 have been subject to programming, and which reclaim units 420 of FIG. 4 have been affected (as identified by reclaim unit identifiers 625). In addition, while log page 810 only shows data being programmed from reclaim unit identifier 1, embodiments of the disclosure may support storing information about data being programmed from multiple reclaim unit identifiers 625. It is also worth noting that storage device 120 might select any other reclaim unit 420 of FIG. 4 into which the data in question may be programmed: in some embodiments of the disclosure, storage device 120 might end up programming data from two or more different reclaim units 420 of FIG. 4 being subject to garbage collection into a common reclaim unit 420 of FIG. 4.

Processor 110 may eventually send log page request 820 to storage device 120. In response, storage device 120 may send log page response 825, which may include log page 810. Processor 110 may then do with this information what it wants. For example, if processor 110 was attempting to delete all information in reclaim unit 420 of FIG. 4 so that reclaim unit 420 of FIG. 4 may be deallocated, processor 110 might simply send the appropriate requests 655 of FIG. 6B to delete the data at logical addresses 710 that were subject to programming (as the programming of that data does not change the fact that processor 110 is not interested in keeping that data any longer). On the other hand, if the data that was programmed by storage device 120 was data that processor 110 wanted to keep and would have programmed itself to a new reclaim unit 420 of FIG. 4, then storage device 120 may have saved processor 110 the trouble of programming that data as part of requests 655 of FIG. 6B, and processor 110 may simply note for itself that logical address 710 is now stored in reclaim unit 625 instead. Note that since storage device 120 may have erased any blocks 410 of FIG. 4 in reclaim unit 420 of FIG. 4, processor 110 may not need to send a request to deallocate reclaim unit 420 of FIG. 4.

In FIG. 8, it is implicitly assumed that storage device 120 may send garbage collection message 805 to processor 110 only if processor 110 is performing host-managed garbage collection of reclaim unit 420 of FIG. 4 identified by reclaim unit identifier 625. Since this situation may be the one time that processor 110 and storage device 120 are both independently trying to perform garbage collection on reclaim unit 420 of FIG. 4 identified by reclaim unit 625, this situation is the one where processor 110 may need to know that storage device 120 is also attempting to perform garbage collection on reclaim unit 420 of FIG. 4 identified by reclaim unit identifier 625. But in other embodiments of the disclosure, storage device 120 may inform processor 110 that storage device 120 is attempting to perform garbage collection on any reclaim unit 420 of FIG. 4 identified by reclaim unit identifier 625. In this manner, processor 110 may be made aware of garbage collection being performed by storage device 120, so that processor 110 might delay attempting to perform host-managed garbage collection on reclaim unit 420 currently being subject to garbage collection by storage device 120.

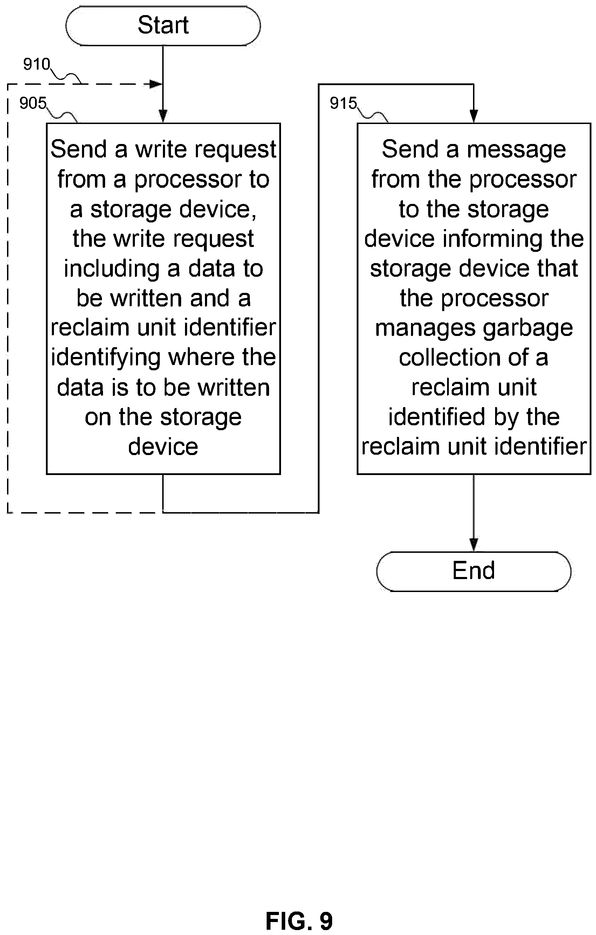

In the above discussion of FIGs. 6-8, the focus has been on reclaim units 420 of FIG. 4. But as discussed above, reclaim units 420 of FIG. 4 might be coincident with blocks 410 of FIG. 4. For this reason, embodiments of the disclosure may be used with storage devices 120 not designed to use reclaim units 420 of FIG. 4 simply by replacing reclaim unit 420 of FIG. 4 with block 410 of FIG. 4. In other words, processor 110 of FIG. 1 may perform host-managed garbage collection of blocks 410 of FIG. 4 in a storage device 120 that does not specifically support reclaim units 420 of FIG. 4, without any further modification (other than for supporting host-managed garbage collection). Any reference to reclaim unit 420 of FIG. 4 in FIGs. 9-22 may be understood as referring to block 410 of FIG. 4 as well, for similar reasons.

FIG. 9 shows a flowchart of an example procedure for processor 110 of FIG. 1 to perform host-managed garbage collection of reclaim unit 420 of FIG. 4, according to embodiments of the disclosure. In FIG. 9, at block 905, processor 110 of FIG. 1 may send write request 640 of FIG. 6A to storage device 120 of FIG. 1. The write request 640 of FIG. 6A may include data 645 of FIG. 6A to be written, as well as reclaim unit identifier 625 of FIG. 6A indicating where processor 110 of FIG. 1 would like data 645 of FIG. 6A to be written. Note that block 905 may be performed multiple times-that is, processor 110 of FIG. 1 may send multiple write requests 640 of FIG. 6A to storage device 120 of FIG. 1-as shown by dashed line 910.

At block 915, processor 110 of FIG. 1 may send host garbage collection start message 650 of FIG. 6B, which may also include reclaim unit identifier 625 of FIG. 6B, to storage device 120 of FIG. 1. Host garbage collection start message 650 of FIG. 6B may inform storage device 120 of FIG. 1 that processor 110 of FIG. 1 will manage garbage collection for reclaim unit 420 of FIG. 4 identified by reclaim unit identifier 625 of FIG. 6B. Storage device 120 may then know to deprioritize garbage collection of reclaim unit 420.

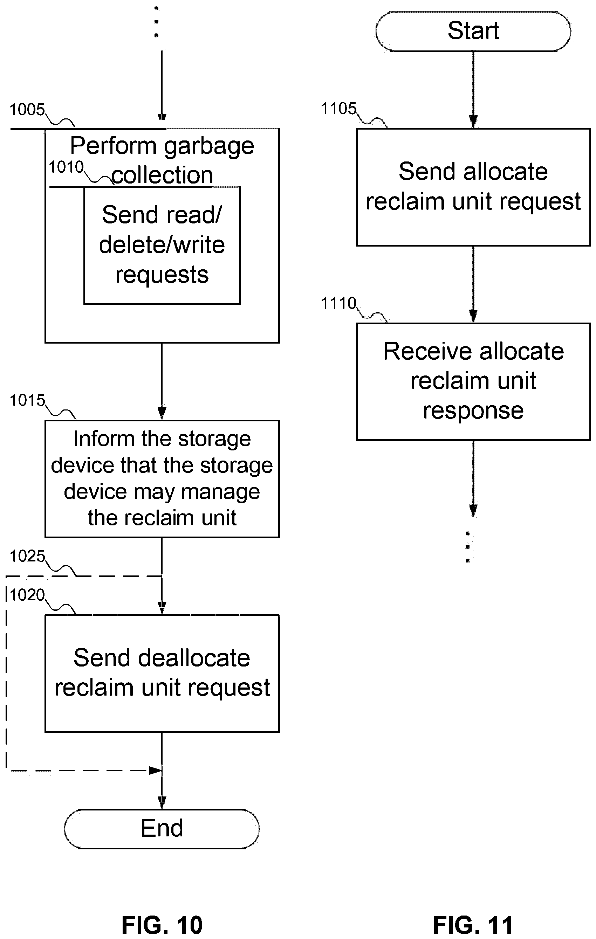

FIG. 10 shows a flowchart of an example procedure for processor 110 of FIG. 1 to perform host-managed garbage collection of reclaim unit 420 of FIG. 4, according to embodiments of the disclosure. FIG. 10 may represent a continuation of the flowchart of the example procedure shown in FIG. 9. At block 1005, processor 110 of FIG. 1 may perform garbage collection of reclaim unit 420 of FIG. 4 identified by reclaim unit identifier 625 of FIG. 6B. Performing garbage collection on reclaim unit 420 of FIG. 4 identified by reclaim unit identifier 625 of FIG. 6B by processor 110 of FIG. 1 may involve sending requests 655 of FIG. 6B to storage device 120 of FIG. 1 to read valid data from reclaim unit 420 of FIG. 4 identified by reclaim unit identifier 625 of FIG. 6B, writing valid data to a new reclaim unit 420 of FIG. 4 identified by another reclaim unit identifier 625 of FIG. 6B, and/or deleting data from reclaim unit 420 of FIG. 4 identified by reclaim unit identifier 625 of FIG. 6B, as shown by block 1010. Block 1010 may be repeated multiple times, depending on how much data in reclaim unit 420 of FIG. 4 identified by reclaim unit identifier 625 of FIG. 6B is to be read, written, or deleted. Note also that in some embodiments of the disclosure, processor 110 of FIG. 1 might not bother to send delete requests to storage device 120 of FIG. 1 to delete data from reclaim unit 420 of FIG. 4 identified by reclaim unit identifier 625 of FIG. 6B, as such deletion may be performed automatically as part of deallocating reclaim unit 420 of FIG. 4 identified by reclaim unit 625 of FIG. 6B.

Eventually, at block 1015, processor 110 of FIG. 1 may send host garbage collection end message 660 of FIG. 6B to storage device 120 of FIG. 1, to inform storage device 120 of FIG. 1 that processor 110 of FIG. 1 is no longer managing garbage collection of reclaim unit 420 of FIG. 4 identified by reclaim unit identifier 625 of FIG. 6B. Finally, at block 1020, processor 110 of FIG. 1 may send deallocate reclaim unit request 665 of FIG. 6B, requesting that storage device 120 of FIG. 1 may deallocate reclaim unit 420 of FIG. 4 identified by reclaim unit identifier 625 of FIG. 6B (and implicitly requesting the deletion of any remaining valid data in reclaim unit 420 of FIG. 4 identified by reclaim unit identifier 625 of FIG. 6B). In some situations, processor 110 of FIG. 1 may choose not to deallocate reclaim unit 420 of FIG. 4 identified by reclaim unit identifier 625 of FIG. 6B: in such situations, block 1020 may be omitted, as shown by dashed line 1025.

Not shown in FIG. 10 is processor 110 of FIG. 1 confirming that any remaining valid data in reclaim unit 420 of FIG. 4 identified by reclaim unit identifier 625 of FIG. 6B may be deleted. As discussed with reference to FIGs. 6A-6B above, storage device 120 of FIG. 1 may request such confirmation before deallocating reclaim unit 420 of FIG. 4, in which case processor 110 of FIG. 1 may confirm that any remaining valid data in reclaim unit 420 of FIG. 4 identified by reclaim unit identifier 625 of FIGs. 6A-6B may be deleted.

FIG. 11 shows a flowchart of an example procedure for processor 110 of FIG. 1 to request allocation of reclaim unit 420 of FIG. 4 from storage device 120 of FIG. 1, according to embodiments of the disclosure. In FIG. 11, at block 1105, processor 110 of FIG. 1 may send allocate reclaim unit request 605 of FIG. 6A to storage device 120 of FIG. 1. Allocate reclaim unit request 605 of FIG. 6A may include size 610 of FIG. 6A for reclaim unit 420 of FIG. 4, and/or allocate reclaim unit request 605 of FIG. 6A may include contiguous flag 615 of FIG. 6 indicating whether reclaim unit 420 of FIG. 4 should be allocated as a contiguous range of physical addresses in flash memory chips 320 of FIG. 3. At block 1110, processor 110 of FIG. 1 may receive allocate reclaim unit response 620 of FIG. 6A from storage device 120 of FIG. 1. Allocate reclaim unit response 620 of FIG. 6 may include reclaim unit identifier 625 of FIG. 6A.

FIG. 12 shows a flowchart of an example procedure for processor 110 of FIG. 1 to determine reclaim unit 420 of FIG. 4 identifier of FIG. 6A, according to embodiments of the disclosure. In FIG. 12, at block 1205, processor 110 of FIG. 1 may send reclaim unit identifier request 630 of FIG. 6A to storage device 120 of FIG. 1, requesting a log page including the reclaim unit associated with one or more logical addresses. This log page may be similar to log page 810 of FIG. 8, but with only one reclaim unit identifier listed per logical address 710 of FIG. 7 (since this log page is not informing processor 110 of FIG. 1 that data has been moved from one reclaim unit 420 of FIG. 4 to another reclaim unit 420 of FIG. 4). At block 1210, processor 110 of FIG. 1 may receive log page 810 of FIG. 8 from storage device 120 of FIG. 1, from which processor 110 of FIG. 1 may determine reclaim unit identifier 625 of FIG. 6A that may be used with write requests 640 of FIG. 6A as in block 905 of FIG. 9.

FIG. 13 shows a flowchart of an example procedure for processor 110 of FIG. 1 to be notified by storage device 120 of FIG. 1 that storage device 120 of FIG. 1 is performing garbage collection of reclaim unit 420 of FIG. 4, according to embodiments of the disclosure. In FIG. 13, at block 1305, processor 110 of FIG. 1 may receive garbage collection message 805 of FIG. 8 from storage device 120 of FIG. 1. Garbage collection message 805 of FIG. 8 may inform processor 110 of FIG. 1 that storage device 120 of FIG. 1 is performing garbage collection of reclaim unit 420 of FIG. 4 identified by reclaim unit identifier 625 of FIGs. 6A-6B. As discussed with reference to FIG. 8 above, in some embodiments of the disclosure, storage device 120 of FIG. 1 may send garbage collection message 805 of FIG. 8 only regarding reclaim units 420 of FIG. 4 identified by reclaim unit identifier 625 of FIGs. 6A-6B for which processor 110 of FIG. 1 is attempting to perform host-managed garbage collection; in other embodiments of the disclosure, storage device 120 of FIG. 1 may send garbage collection message 805 of FIG. 8 even regarding reclaim units 420 of FIG. 4 for which processor 110 of FIG. 1 is not attempting to perform host-managed garbage collection. At block 1310, processor 110 of FIG. 1 may send log page request 820 of FIG. 8 to storage device 120 of FIG. 1, requesting log page 810 of FIG. 8 from storage device 120 of FIG. 1. Finally, at block 1315, processor 110 of FIG. 1 may receive log page response 825 of FIG. 8 from storage device 120 of FIG. 1, which may include log page 810, and from which processor 110 of FIG. 1 may learn to where data in reclaim unit 420 of FIG. 4 identified by reclaim unit identifier 625 of FIGs. 6A-6B has been relocated.

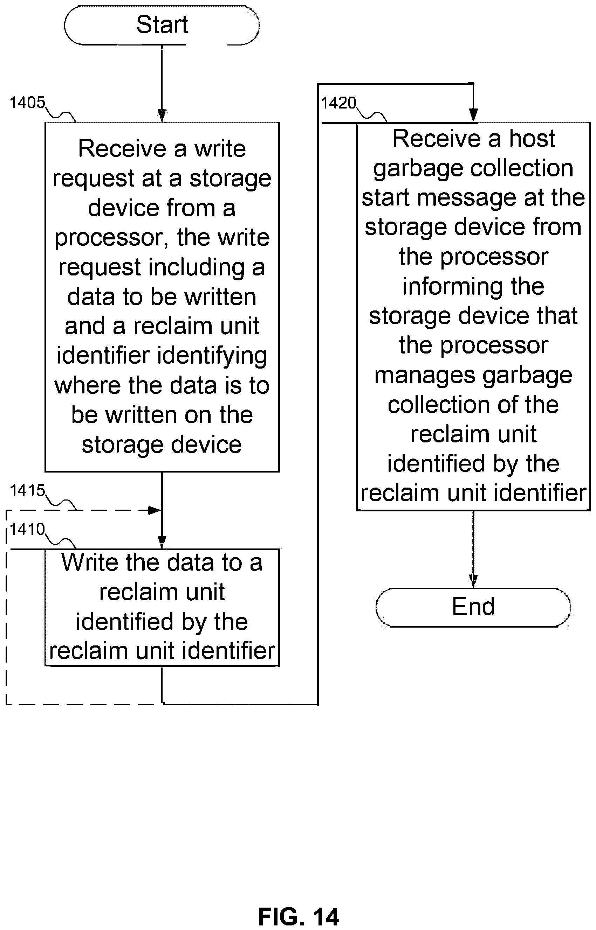

FIG. 14 shows a flowchart of an example procedure for storage device 120 of FIG. 1 to support host-managed garbage collection of reclaim unit 420 of FIG. 4, according to embodiments of the disclosure. In FIG. 14, at block 1405, storage device 120 may receive write request 640 from processor 110. Write request 640 may include data 645 to be written to storage device 120. Write request 640 may also include reclaim unit identifier 625, which storage device 120 may use to identify reclaim unit 420 into which data 645 may be written. At block 1410, storage device 120 may write data 645 into reclaim unit 420 identified by reclaim unit identifier 625. To write data 645 into reclaim unit 420, storage device 120 may determine which reclaim unit 420 is identified by reclaim unit identifier 625. Note that block 1410 may be performed multiple times-that is, storage device 120 may receive multiple write requests 640 from processor 110-as shown by dashed line 1415.

Finally, at block 1420, storage device 120 may receive from processor 110 host garbage collection start message 650. Host garbage collection start message 650 may notify storage device 120 that processor 110 is performing host-managed garbage collection of reclaim unit 420 identified by reclaim unit identifier 625. Storage device 120 may then know to deprioritize garbage collection of reclaim unit 420.

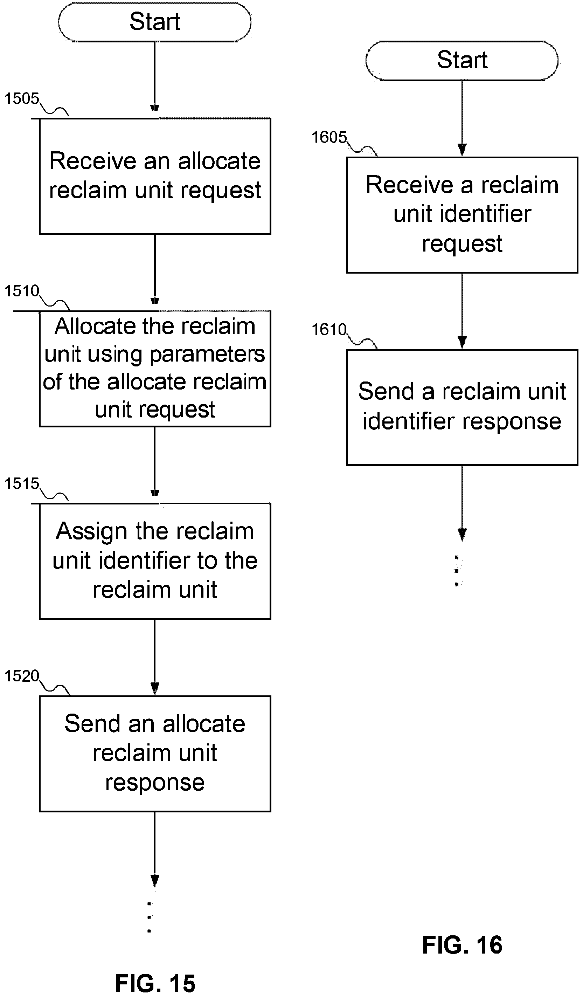

FIG. 15 shows a flowchart of an example procedure for storage device 120 of FIG. 1 to allocate reclaim unit 420 of FIG. 4, according to embodiments of the disclosure. In FIG. 15, at block 1505, storage device 120 of FIG. 1 may receive allocate reclaim unit request 605 of FIG. 6A from processor 110 of FIG. 1. Allocate reclaim unit request 605 of FIG. 6A may include parameters, such as size 610 of FIG. 6A for reclaim unit 420, and/or contiguous flag 615 of FIG. 6A indicating whether reclaim unit 420 of FIG. 4 should be allocated as a continuous range of physical addresses in flash memory chips 320 of FIG. 3. At block 1510, storage device 120 of FIG. 1 may allocate reclaim unit 420 of FIG. 4 using the parameters attached to allocate reclaim unit request 605 of FIG. 6A.

At block 1515, storage device 120 of FIG. 1 may assign reclaim unit identifier 625 of FIGs. 6A-6B to reclaim unit 420 of FIG. 4. Storage device 120 of FIG. 1 may select reclaim unit identifier 625 of FIGs. 6A-6B, or processor 110 of FIG. 1 may select reclaim unit identifier 625 of FIGs. 6A-6B. Regardless of how or by which component reclaim unit identifier 625 of FIGs. 6A-6B is selected, at block 1520, storage device 120 of FIG. 1 may send allocate reclaim unit response 620 of FIG. 6 to processor 110 of FIG. 1, to report the result of allocating reclaim unit 420 of FIG. 4. If storage device 120 of FIG. 1 selects reclaim unit identifier 625 of FIGs. 6A-6B, storage device 120 of FIG. 1 may include reclaim unit identifier 625 of FIGs. 6A-6B with allocate reclaim unit response 620 of FIG. 6.

FIG. 16 shows a flowchart of an example procedure for storage device 120 of FIG. 1 to send reclaim unit identifier 625 of FIGs. 6A-6B to processor 110 of FIG. 1, according to embodiments of the disclosure. In FIG. 16, at block 1605, storage device 120 may receive reclaim unit identifier request 630 from processor 110. At block 1610, storage device 120 may send reclaim unit identifier response 635 to processor 110. Reclaim unit identifier response 635 may include reclaim unit identifier 625, so that processor 110 may attach reclaim unit identifier 625 to write request 640.

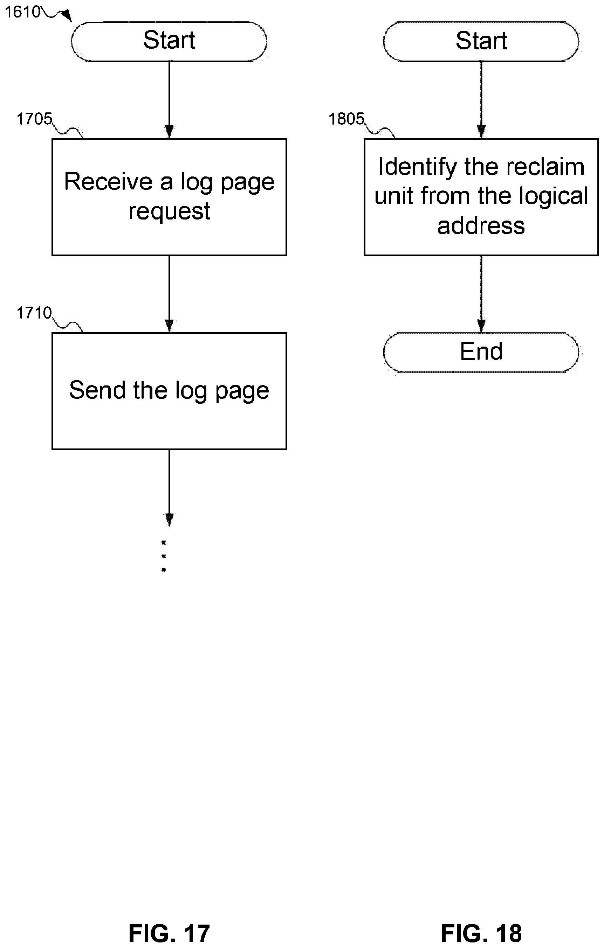

FIG. 17 shows a flowchart of an example procedure for storage device 120 of FIG. 1 to send reclaim unit 420 identifier of FIGs. 6A-6B to processor 110 of FIG. 1 using a log page, according to embodiments of the disclosure. In FIG. 17, at block 1705, storage device 120 may receive reclaim unit identifier request 630 requesting a log page including the reclaim unit associated with one or more logical addresses. This log page may be similar to log page 810, but with only one reclaim unit identifier listed per logical address 710 (since this log page is not informing processor 110 that data has been moved from one reclaim unit 420 to another reclaim unit 420). At block 1710, storage device 120 may send log page 810 to processor 110. Processor 110 may then use log page 810 to determine reclaim unit identifier 625 that may be used with write requests 640 as in block 1405.

FIG. 18 shows a flowchart of an example procedure for storage device 120 of FIG. 1 to map logical address 710 of FIG. 7 to reclaim unit 420 of FIG. 4, according to embodiments of the disclosure. In FIG. 18, at block 1805, storage device 120 may use flash translation layer 335 to identify an association between logical address 710 and reclaim unit identifier 625. From this association and logical address 710, storage device 120 may identify reclaim unit identifier 625, and thence reclaim unit 420.

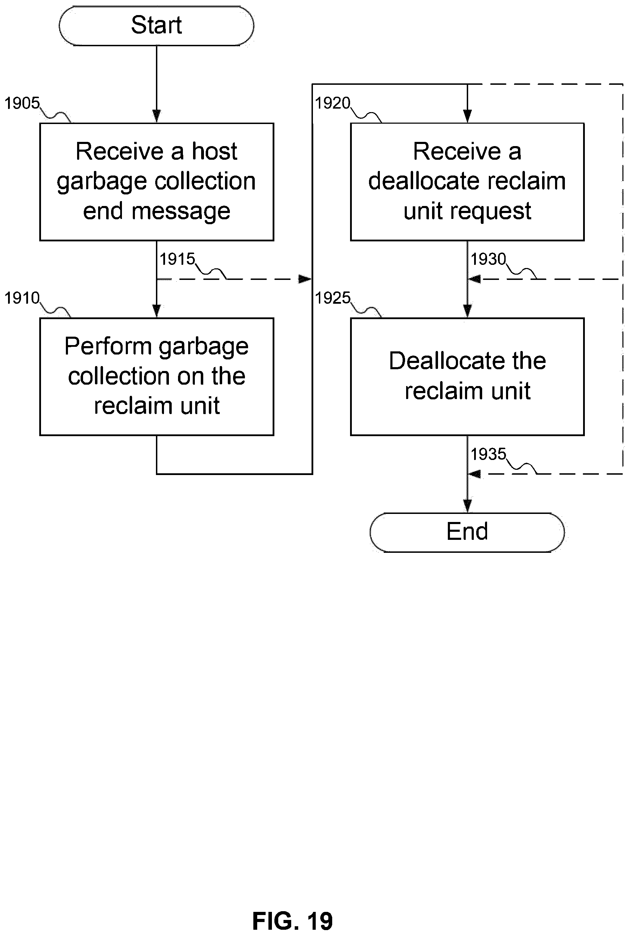

FIG. 19 shows a flowchart of an example procedure for storage device 120 of FIG. 1 to perform garbage collection after processor 110 of FIG. 1 has completed garbage collection on reclaim unit 420 of FIG. 4, according to embodiments of the disclosure. In FIG. 19, at block 1905, storage device 120 may receive host garbage collection end message 660 from processor 110. Host garbage collection end message 660 may include reclaim unit identifier 625, so that storage device 120 knows which reclaim unit 420 (identified by reclaim unit identifier 625) may now be subject to garbage collection by storage device 120. At block 1910, storage device 120 may perform garbage collection on reclaim unit 420. Performing garbage collection on storage may involve reading valid data from reclaim unit 420 and programming that valid data into new reclaim unit(s) 420. Once all valid data in reclaim unit 420 has been programmed into new reclaim unit(s) 420, performing garbage collection may also include erasing reclaim unit 420, so that pages 405 of reclaim unit 420 are free to store new data. Note that storage device 120 does not have to perform garbage collection, as shown by dashed line 1915, even if reclaim unit 420 is to be deallocated (reclaim unit 420 may be deallocated without performing garbage collection, since deallocating reclaim unit 420 may imply that processor 110 is not interested in keeping any of the data in reclaim 420).

At block 1920, storage device 120 may receive deallocate reclaim unit request 665 from processor 110. Deallocate reclaim unit request 665 may include reclaim unit identifier 625, letting storage device 120 know which reclaim unit 420 (identified by reclaim unit identifier 625) may be deallocated. Then, at block 1925, storage device 120 may deallocate reclaim unit 420.

Note that in some embodiments of the disclosure, block 1920 may be omitted, as shown by dashed line 1930. In such embodiments of the disclosure, storage device 120 may interpret host garbage collection end message 660 as a request to deallocate reclaim unit 420 identified by reclaim unit 625, and block 1925 may be performed without explicitly receiving deallocate reclaim unit request 665 as shown in block 1920. But as discussed above, in other embodiments of the disclosure, storage device 120 may opt not to deallocate reclaim unit 420 without an explicit request from processor 110.

Note, too, that in some embodiments of the disclosure, both blocks 1920 and 1925 may be omitted, as shown by dashed line 1935. Dashed line 1935 shows that in some embodiments of the disclosure, reclaim unit 420 identified by reclaim unit identifier 625 may continue to be used by processor 110 even after processor 110 sends host garbage collection end message 660 to storage device 120 as shown in block 1905.

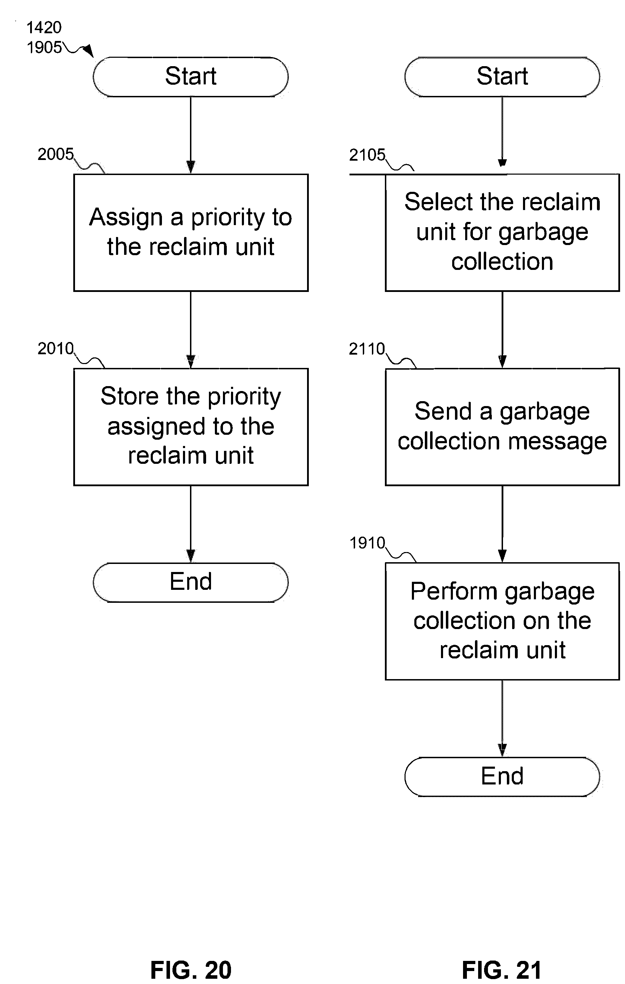

FIG. 20 shows a flowchart of an example procedure for garbage collection priority unit 340 of FIG. 3 to assign priority 505 of FIG. 5 to reclaim unit 420 of FIG. 4, according to embodiments of the disclosure. In FIG. 20, at block 2005, garbage collection priority unit 340 may assign priority 505 to reclaim unit 420, and at block 2010, garbage collection priority unit 340 may store priority 505 in storage 345. Note that garbage collection priority unit 340 may function as shown in FIG. 20 upon storage device 120 receiving either host garbage collection start message 650 or host garbage collection end message 660, as shown in blocks 1420 and 1905, respectively. When storage device 120 receives host garbage collection start message 650 as shown in block 1420, garbage collection priority unit 340 may assign a low priority to reclaim unit 420 identified by reclaim unit identifier 625, in an attempt to avoid storage device 120 selecting reclaim unit 420 for garbage collection while processor 110 is managing garbage collection of reclaim unit 420 identified by reclaim unit identifier 625. And when storage device 120 receives host garbage collection end message 660 as shown in block 1905, garbage collection priority unit 340 may assign a high priority to reclaim unit 420 identified by reclaim unit identifier 625, in an attempt to quickly free up pages 405 that have been invalidated during host-managed garbage collection by processor 110.

FIG. 21 shows a flowchart of an example procedure for storage device 120 of FIG. 1 to select reclaim unit 420 of FIG. 4 for garbage collection, according to embodiments of the disclosure. FIG. 21 may represent the situation where reclaim unit 420 is currently subject to host-managed garbage collection, but storage device 120 selects reclaim unit 420 for garbage collection anyway. In FIG. 21, at block 2105, storage device 120 may select reclaim 420 for garbage collection. As discussed above, storage device 120 might select reclaim unit 420 for garbage collection even though processor 110 is managing garbage collection of reclaim unit 420 either because of media integrity issues or because storage device is below a threshold number of free pages 405 and additional free pages are needed as soon as possible. At block 2110, storage device 120 may send garbage collection message 805 to processor 110, informing processor 805 that storage device 120 has selected reclaim unit 420 for garbage collection. Finally, at block 1910, storage device 120 may perform garbage collection on reclaim unit 420.

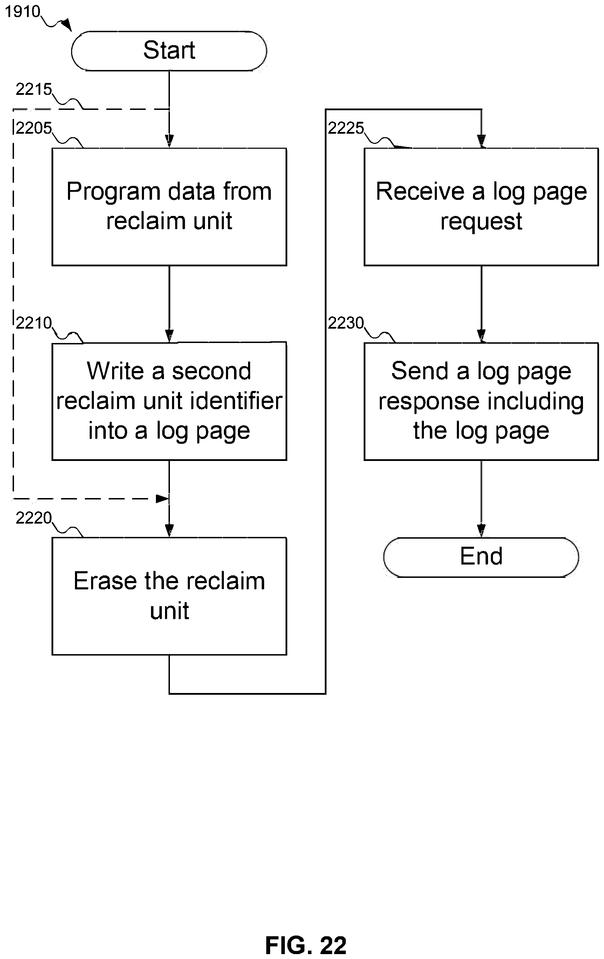

FIG. 22 shows a flowchart of an example procedure for storage device 120 of FIG. 1 to perform garbage collection on reclaim unit 420 of FIG. 4, according to embodiments of the disclosure. In FIG. 22, at block 2205, storage device 120 may program data from reclaim unit 420 into a new reclaim unit 420. At block 2210, storage device 120 may store in log page 810 information about what data (identified, for example, by logical address 710) has been programmed from reclaim unit 420, and into which reclaim unit 420 the data has been programmed. Note that blocks 2205 and 2210 might be omitted in situations where reclaim unit 420 does not contain any valid data, as shown by dashed line 2215. (If reclaim unit 420 does not currently contain any valid data, then it is unlikely that processor 110 would be attempting to perform host-managed garbage collection of reclaim unit 420. But even if processor 110 is not performing host-managed garbage collection of reclaim unit 420, processor 110 might still want to know into which reclaim unit(s) 420 data was programmed, so blocks 2205 and 2210 might still be pertinent even when processor 110 is not performing host-managed garbage collection of reclaim unit 420. Then, at block 2220, storage device 120 may erase reclaim unit 420, thereby returning all pages 405 in reclaim unit 420 to free status to be written to again.

Eventually, at block 2225, storage device 120 may receive log page request 820 from processor 110. Log page request 820 may request log page 810 as assembled as described in block 2210. At block 2230, storage device 120 may send log page response 825 to processor 110. Log page response 825 may include log page 810.

In FIGs. 9-22, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Some embodiments of the disclosure may include an architecture and methods for a processor and a storage device to coordinate garbage collection. By coordinating garbage collection, the processor may opt to manage garbage collection on a reclaim unit. When the processor is managing garbage collection of a reclaim unit, the storage device may try to avoid performing garbage collection the reclaim unit. The processor may have additional information regarding what will happen to data in the reclaim unit that the storage device may lack. The processor may therefore program only valid that needs to be kept before informing the storage device that the reclaim unit may be erased and/or deallocated. The storage device, lacking this information, might program valid data from the reclaim unit that would be deleted shortly thereafter. By permitting the processor to perform host-managed garbage collection, the write amplification of data may be reduced, providing a technical advantage over storage devices that do not support host-managed garbage collection.

Data placement technologies may manage how to place data together and how to deallocate it. But data placement technologies do not define a mechanism to coordinate Garbage Collection (GC) between the host and the device. In a poorly-behaved host, the device may perform regular GC as in a conventional namespace (CNS). But in a well-behaved host, coordinating GC may have the potential to reduce the Write Amplification Factor (WAF) benefits of FDP in real workloads, as the device may attempt to perform GC of some Logical Block Addresses (LBAs) just before the Host performs GC of the same LBAs. Zoned namespaces (ZNS) are another form of data placement that may benefit from embodiments of the disclosure.

Embodiments of the disclosure may include a mechanism for a host (a well-behaved host) to communicate to the device that GC has started on a RU. The device may then respect this GC unless a critical capacity threshold is crossed, or where the host is not GC'ing as promised.

All device actions may be communicated through designated log pages.

A device triggered exception path may occur concurrent to the Host's normal path. Therefore, deallocates to LBAs being moved by the device may be still possible.

Embodiments of the disclosure may include methods of identifying the LBAs or RU to withhold Drive GC. For example, each RU may be provided with a new identifier. The drive may log RU_IDs and the may Host query this log to identify current and past RUs that were written.

The drive may return an Asynchronous Event Request (AER) or Asynchronous Event Notification (AEN) for every RU to the Host containing each RU_ID. This information may be provided at the beginning of writing an RU or at the end of filling an RU. The Host may provide an RU_ID for each write. The Host may transition RU_ID at the transition of each full RU, and error protocols may be used for the first/last RU_ID provided by the Host. Potential duplicated RU_IDs provided by the Host might be obsolete in the prior RU ID's definition.

As another example, the Host may provide an LBA to identify an RU. The drive may then perform a Logical-to-Physical (L2P) translation of the LBA to RU.

The drive may read superblock (SB) metadata information to identify other Erase Blocks (EBs) in the SB, LBAs contained in the SB, and RU identifying information. For example, an SB may be defined as one EB per plane per die, although other definitions are possible, including any desired grouping of EBs. The drive may generate the LBA list or stores the RU identifying info. Optionally, the drive may return this LBA list to the Host. In this manner, embodiments of the disclosure may also be applicable to conventional storage devices.

As yet another example, the Host may provide an LBA range or list. The drive may store the LBA list.

As yet another example, the Host may provide one or more Zone Start LBA (ZSLBA) to identify the Zone(s) that should not be GC'ed. Such zones may be 'equivalent' to Rus.

As yet another example, the Host may provide an Reclamation Unit Handle (RUH) RUH_ID (or a Placement Handle Identifier that is translated to an RUH_ID). Using this RUH_ID, an entire persistently isolated RUH or the entire pool of initially isolated RUHs may be viewed as a "do not GC". The drive may GC other RUH_IDs that aren't included.

The drive may trigger emergency data movement due to media integrity issues (read disturb, retention timers, open block timers, etc.).

As an example of how embodiments of the disclosure might operate, consider a database system using objects maps objects to RUs based on lifetime. When the database recycles an object, it communicates to the device that GC has started. The database system may then proceed to deallocate the object. This translates to RU deallocation. The database system may communicate to the device that GC has finalized, at which point the physical media in the device may be scheduled for re-use without any in-device data movement. The Host may also tell the drive to emphasize GC on these identifiers.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, *e.g*., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

Embodiments of the disclosure may extend to the following statements, without limitation:
Statement 1. An embodiment of the disclosure includes a system, comprising:
   a storage device; and
   a processor configured to send a write request to the storage device, the write request including a data to be written and a reclaim unit identifier identifying how the data is to be organized on the storage device,
   wherein the processor is further configured to send a message to the storage device regarding management of garbage collection of a reclaim unit identified by the reclaim unit identifier.
Statement 2. An embodiment of the disclosure includes the system according to statement 1, wherein the message includes a host garbage collection start message.
Statement 3. An embodiment of the disclosure includes the system according to statement 1, wherein the message informs the storage device that the processor is responsible for managing garbage collection of the reclaim unit identified by the reclaim unit identifier.
Statement 4. An embodiment of the disclosure includes the system according to statement 1, wherein the message informs the storage device to prioritize garbage collection of a second reclaim unit over garbage collection of the reclaim unit identified by the reclaim unit identifier.
Statement 5. An embodiment of the disclosure includes the system according to statement 1, wherein the processor is further configured to request allocation of the reclaim unit.
Statement 6. An embodiment of the disclosure includes the system according to statement 1, wherein the storage device is configured to assign a first garbage collection priority to the reclaim unit.
Statement 7. An embodiment of the disclosure includes the system according to statement 6, wherein:
   the storage device includes a second reclaim unit; and
   the storage device includes a garbage collection priority unit to assign a second garbage collection priority to the second reclaim unit, the first garbage collection priority lower than the second garbage collection priority.
Statement 8. An embodiment of the disclosure includes the system according to statement 7, wherein the storage device is configured to perform garbage collection of the second reclaim unit based at least in part on the first garbage collection priority and the second garbage collection priority.
Statement 9. An embodiment of the disclosure includes the system according to statement 7, wherein the storage device includes a storage for the first garbage collection priority and the second garbage collection priority.
Statement 10. An embodiment of the disclosure includes the system according to statement 1, wherein:
   the reclaim unit includes a first size; and
   the storage device includes a second reclaim unit, the second reclaim unit including a second size.
Statement 11. An embodiment of the disclosure includes the system according to statement 10, wherein the first size and the second size are different.
Statement 12. An embodiment of the disclosure includes the system according to statement 10, wherein the first size and the second size are equal.
Statement 13. An embodiment of the disclosure includes the system according to statement 1, wherein the processor is further configured to send a message to the storage device to inform the storage device to perform garbage collection of the reclaim unit.
Statement 14. An embodiment of the disclosure includes the system according to statement 13, wherein the message includes a host garbage collection end message.
Statement 15. An embodiment of the disclosure includes the system according to statement 13, wherein the message includes a deallocate request.
Statement 16. An embodiment of the disclosure includes the system according to statement 13, wherein the processor is further configured to send a deallocate request to the storage device to request that the storage device to deallocate the reclaim unit.
Statement 17. An embodiment of the disclosure includes the system according to statement 13, wherein the processor is further configured to inform the storage device to assign a garbage collection priority to the reclaim unit.
Statement 18. An embodiment of the disclosure includes the system according to statement 13, wherein the processor is further configured to send the message to the storage device to inform the storage device to perform garbage collection of the reclaim unit based at least in part on the processor deallocating the reclaim unit.
Statement 19. An embodiment of the disclosure includes the system according to statement 13, wherein the processor is further configured to send the message to the storage device to inform the storage device to perform garbage collection of the reclaim unit based at least in part on the processor programming data from the reclaim unit into a second reclaim unit.
Statement 20. An embodiment of the disclosure includes the system according to statement 19, wherein the processor is further configured to read a second data from the reclaim unit in the storage device, write the second data to a second reclaim unit in the storage device, and delete the second data from the reclaim unit in the storage device.
Statement 21. An embodiment of the disclosure includes the system according to statement 1, wherein the processor is further configured to send the message to the storage device to inform the storage device that the processor manages garbage collection of the reclaim unit based at least in part on the reclaim unit identifier, a reclaim unit handle, a logical address of the data, or a logical address range.
Statement 22. An embodiment of the disclosure includes the system according to statement 21, wherein:
   the processor is further configured to send the message to the storage device to inform the storage device that the processor manages garbage collection of the reclaim unit based at least in part on the reclaim unit handle; and
   the storage device is configured to identify the reclaim unit based at least in part on the reclaim unit handle.
Statement 23. An embodiment of the disclosure includes the system according to statement 22, wherein the storage device is further configured to identify a second reclaim unit based at least in part on the reclaim unit handle.
Statement 24. An embodiment of the disclosure includes the system according to statement 21, wherein:
   the processor is further configured to send the message to the storage device to inform the storage device that the processor manages garbage collection of the reclaim unit based at least in part on the logical address of the data; and
   the storage device is configured to identify the reclaim unit based at least in part on the logical address of the data.
Statement 25. An embodiment of the disclosure includes the system according to statement 24, wherein the reclaim unit includes the logical address of the data.
Statement 26. An embodiment of the disclosure includes the system according to statement 24, wherein the storage device includes a storage for an association of the logical address of the data with the reclaim unit.
Statement 27. An embodiment of the disclosure includes the system according to statement 26, wherein the storage includes a flash translation layer.
Statement 28. An embodiment of the disclosure includes the system according to statement 24, wherein the logical address of the data includes a zone start logical address.
Statement 29. An embodiment of the disclosure includes the system according to statement 21, wherein:
   the processor is further configured to send the message to the storage device to inform the storage device that the processor manages garbage collection of the reclaim unit based at least in part on the logical address range; and
   the storage device is configured to identify the reclaim unit based at least in part on the logical address range.
Statement 30. An embodiment of the disclosure includes the system according to statement 29, wherein the reclaim unit includes a logical address of the data in the logical address range.
Statement 31. An embodiment of the disclosure includes the system according to statement 30, wherein the storage device is further configured to identify a second reclaim unit based at least in part on the logical address range, the second reclaim unit including a second logical address in the logical address range.
Statement 32. An embodiment of the disclosure includes the system according to statement 1, wherein the storage device includes a controller to select the reclaim unit for garbage collection and to send a garbage collection message to the processor to inform the processor.
Statement 33. An embodiment of the disclosure includes the system according to statement 32, wherein the storage device includes a log page, the log page identifying the reclaim unit as selected for garbage collection by the storage device.
Statement 34. An embodiment of the disclosure includes the system according to statement 33, wherein the processor is configured to determine that the storage device has selected the reclaim unit for garbage collection based at least in part on the log page.
Statement 35. An embodiment of the disclosure includes the system according to statement 32, wherein the controller is configured to select the reclaim unit for garbage collection based at least in part on a media integrity issue.
Statement 36. An embodiment of the disclosure includes the system according to statement 35, wherein the media integrity issue includes a read disturb, a retention timer, or an open timer.
Statement 37. An embodiment of the disclosure includes the system according to statement 1, wherein the processor is further configured to determine the reclaim unit identifier from a log page written by the storage device.
Statement 38. An embodiment of the disclosure includes the system according to statement 37, wherein the processor is further configured to send a log page request to the storage device to request the log page.
Statement 39. An embodiment of the disclosure includes the system according to statement 1, wherein the storage device is further configured to send a reclaim unit identifier response to the processor including the reclaim unit identifier.
Statement 40. An embodiment of the disclosure includes the system according to statement 39, wherein the processor is further configured to send a reclaim unit identifier request to the storage device to request the reclaim unit identifier from the storage device.
Statement 41. An embodiment of the disclosure includes the system according to statement 39, wherein the processor is further configured to receive the reclaim unit identifier from the storage device in response to a second write request including a second data.
Statement 42. An embodiment of the disclosure includes the system according to statement 41, wherein the storage device is configured to write the second data to the reclaim unit as the first data in the reclaim unit.
Statement 43. An embodiment of the disclosure includes the system according to statement 41, wherein the storage device is configured to write the second data to the reclaim unit as the last data in the reclaim unit.
Statement 44. An embodiment of the disclosure includes a method, comprising:
   sending a write request from a processor to a storage device, the write request including a data to be written and a reclaim unit identifier identifying how the data is to be organized on the storage device; and
   sending a message from the processor to the storage device regarding management of garbage collection of a reclaim unit identified by the reclaim unit identifier.
Statement 45. An embodiment of the disclosure includes the method according to statement 44, wherein sending the message from the processor to the storage device regarding management of garbage collection of the reclaim unit identified by the reclaim unit identifier includes sending a host garbage collection start message from the processor to the storage device regarding management of garbage collection of the reclaim unit identified by the reclaim unit identifier
Statement 46. An embodiment of the disclosure includes the method according to statement 44, wherein sending the message from the processor to the storage device regarding management of garbage collection of the reclaim unit identified by the reclaim unit identifier includes informing the storage device that the processor is responsible for managing garbage collection of the reclaim unit identified by the reclaim unit identifier.
Statement 47. An embodiment of the disclosure includes the method according to statement 44, wherein sending the message from the processor to the storage device regarding management of garbage collection of the reclaim unit identified by the reclaim unit identifier includes informing the storage device to prioritize garbage collection of a second reclaim unit over garbage collection of the reclaim unit identified by the reclaim unit identifier.
Statement 48. An embodiment of the disclosure includes the method according to statement 44, further comprising:
   sending an allocate reclaim unit request from the processor to the storage device; and
   receiving an allocate reclaim unit response at the processor from the storage device.
Statement 49. An embodiment of the disclosure includes the method according to statement 48, wherein the allocate reclaim unit request includes a size or a contiguous flag.
Statement 50. An embodiment of the disclosure includes the method according to statement 48, wherein the allocate reclaim unit response includes the reclaim unit identifier.
Statement 51. An embodiment of the disclosure includes the method according to statement 44, further comprising sending a second message to the storage device regarding management of garbage collection of the reclaim unit.
Statement 52. An embodiment of the disclosure includes the method according to statement 51, wherein sending the second message to the storage device regarding management of garbage collection of the reclaim unit includes sending a host garbage collection end message to the storage device informing the storage device that the storage device may manage garbage collection of the reclaim unit.
Statement 53. An embodiment of the disclosure includes the method according to statement 51, wherein sending the second message to the storage device regarding management of garbage collection of the reclaim unit includes sending a deallocate request to the storage device requesting that the storage device deallocate the reclaim unit identified by reclaim unit identifier.
Statement 54. An embodiment of the disclosure includes the method according to statement 44, further comprising:
   sending a log page request from the processor to the storage device to request a log page, the log page including the reclaim unit identifier; and
   receiving a log page response from the storage device at the processor, the log page response including the log page.
Statement 55. An embodiment of the disclosure includes the method according to statement 44, wherein the reclaim unit identifier includes a reclaim unit handle, a logical address of the data, or a logical address range.
Statement 56. An embodiment of the disclosure includes the method according to statement 55, further comprising:
   sending a reclaim unit identifier request from the processor (110 to the storage device to request the reclaim unit handle, the reclaim unit handle identifying the reclaim unit; and
   receiving a reclaim unit identifier response at the processor from the storage, the reclaim unit identifier response including the reclaim unit handle from the storage device at the processor.
Statement 57. An embodiment of the disclosure includes the method according to statement 56, wherein the reclaim unit handle further identifies a second reclaim unit.
Statement 58. An embodiment of the disclosure includes the method according to statement 55, wherein the logical address of the data identifies the reclaim unit.
Statement 59. An embodiment of the disclosure includes the method according to statement 58, wherein the reclaim unit includes the logical address of the data.
Statement 60. An embodiment of the disclosure includes the method according to statement 58, wherein the logical address of the data includes a zone start logical address.
Statement 61. An embodiment of the disclosure includes the method according to statement 55, wherein the logical address range identifies the reclaim unit.
Statement 62. An embodiment of the disclosure includes the method according to statement 61, wherein the reclaim unit includes a logical address of the data in the logical address range.
Statement 63. An embodiment of the disclosure includes the method according to statement 62, wherein a second reclaim unit includes a second logical address in the logical address range.
Statement 64. An embodiment of the disclosure includes the method according to statement 44, further comprising performing garbage collection of the reclaim unit by the processor.
Statement 65. An embodiment of the disclosure includes the method according to statement 64, wherein performing garbage collection of the reclaim unit by the processor includes sending a delete request from the processor to the storage device to delete the data from the reclaim unit.
Statement 66. An embodiment of the disclosure includes the method according to statement 64, wherein performing garbage collection of the reclaim unit by the processor includes sending a read request from the processor to the storage device to read the data from the reclaim unit.
Statement 67. An embodiment of the disclosure includes the method according to statement 66, wherein performing garbage collection of the reclaim unit by the processor further includes sending a second write request from the processor to the storage device to write the data to a second reclaim unit.
Statement 68. An embodiment of the disclosure includes the method according to statement 66, wherein performing garbage collection of the reclaim unit by the processor includes sending a second write request from the processor to a second storage device to write the data to a second reclaim unit.
Statement 69. An embodiment of the disclosure includes the method according to statement 44, further comprising receiving a garbage collection message at the processor from the storage device, the garbage collection message indicating that the storage device performs garbage collection of the reclaim unit.
Statement 70. An embodiment of the disclosure includes the method according to statement 69, further comprising:
   sending a log page request from the processor to the storage device to request a log page, the log page identifying a second reclaim unit identifier how the data is organized on the storage device; and
   receiving a log page response at the processor from the storage device, the log page response including the log page.
Statement 71. An embodiment of the disclosure includes a method, comprising:
   receiving a write request at a storage device from a processor, the write request including a data to be written and a reclaim unit identifier identifying how the data is to be organized on the storage device;
   writing the data to a reclaim unit identified by the reclaim unit identifier; and
   receiving a message at the storage device from the processor regarding management of garbage collection of the reclaim unit identified by the reclaim unit identifier.
Statement 72. An embodiment of the disclosure includes the method according to statement 71, wherein receiving the message at the storage device from the processor regarding management of garbage collection of the reclaim unit identified by the reclaim unit identifier includes receiving a host garbage collection start message at the storage device from the processor regarding management of garbage collection of the reclaim unit identified by the reclaim unit identifier.
Statement 73. An embodiment of the disclosure includes the method according to statement 71, wherein receiving the message at the storage device from the processor regarding management of garbage collection of the reclaim unit identified by the reclaim unit identifier includes receiving the message at the storage device from the processor that the processor is responsible for managing garbage collection of the reclaim unit identified by the reclaim unit identifier.
Statement 74. An embodiment of the disclosure includes the method according to statement 71, wherein receiving the message at the storage device from the processor regarding management of garbage collection of the reclaim unit identified by the reclaim unit identifier includes receiving the message at the storage device to prioritize garbage collection of a second reclaim unit over garbage collection of the reclaim unit identified by the reclaim unit identifier.
Statement 75. An embodiment of the disclosure includes the method according to statement 71, further comprising:
   receiving an allocate reclaim unit request at the storage device from the processor; and
   sending an allocate reclaim unit response from the storage device to the processor.
Statement 76. An embodiment of the disclosure includes the method according to statement 75, further comprising allocating the reclaim unit based at least in part on the allocate reclaim unit request.
Statement 77. An embodiment of the disclosure includes the method according to statement 76, wherein:
   the allocate reclaim unit request includes a size or a contiguous flag; and
   allocating the reclaim unit based at least in part on the allocate reclaim unit request includes allocating the reclaim unit based at least in part on the size or the contiguous flag.
Statement 78. An embodiment of the disclosure includes the method according to statement 76, wherein:
   allocating the reclaim unit based at least in part on the allocate reclaim unit request includes assigning the reclaim unit identifier to the reclaim unit; and
   the allocate reclaim unit response includes the reclaim unit identifier.
Statement 79. An embodiment of the disclosure includes the method according to statement 71, wherein receiving the message at the storage device from the processor regarding management of garbage collection of the reclaim unit identified by the reclaim unit identifier includes assigning a priority to the reclaim unit.
Statement 80. An embodiment of the disclosure includes the method according to statement 79, wherein receiving the message at the storage device from the processor regarding management of garbage collection of the reclaim unit identified by the reclaim unit identifier further includes storing the priority assigned to the reclaim unit in a storage.
Statement 81. An embodiment of the disclosure includes the method according to statement 71, further comprising sending a reclaim unit identifier response from the storage device to the processor, the reclaim unit identifier response including the reclaim unit identifier.
Statement 82. An embodiment of the disclosure includes the method according to statement 81, wherein sending the reclaim unit identifier response from the storage device to the processor includes receiving at the storage device a reclaim unit identifier request from the processor for the reclaim unit identifier.
Statement 83. An embodiment of the disclosure includes the method according to statement 81, wherein sending the reclaim unit identifier response from the storage device to the processor includes sending the reclaim unit identifier response from the storage device to the processor based at least in part on receiving the write request at the storage device from the host.
Statement 84. An embodiment of the disclosure includes the method according to statement 81, wherein sending the reclaim unit identifier response from the storage device to the processor includes:
   receiving a second write request at the storage device from the processor, the second write request including a second data to be written; and
   sending the reclaim unit identifier response from the storage device to the processor based at least in part on receiving the second write request at the storage device from the processor.
Statement 85. An embodiment of the disclosure includes the method according to statement 84, wherein sending the reclaim unit identifier response from the storage device to the processor further includes writing the second data to the reclaim unit as the first data in the reclaim unit.
Statement 86. An embodiment of the disclosure includes the method according to statement 84, wherein sending the reclaim unit identifier response from the storage device to the processor further includes writing the second data to the reclaim unit as the last data in the reclaim unit.
Statement 87. An embodiment of the disclosure includes the method according to statement 71, further comprising:
   receiving a reclaim unit identifier request from the processor at the storage device requesting a log page, the log page including the reclaim unit identifier; and
   sending a reclaim unit identifier response from the storage device to the processor.
Statement 88. An embodiment of the disclosure includes the method according to statement 71, wherein the reclaim unit identifier includes a reclaim unit handle, a logical address of the data, or a logical address range.
Statement 89. An embodiment of the disclosure includes the method according to statement 88, further comprising:
   receiving a reclaim unit identifier request at the storage from the processor for the reclaim unit handle; and
   sending a reclaim unit identifier response from the storage device to the processor, the reclaim unit identifier response including the reclaim unit handle,
   wherein the reclaim unit handle identifies the reclaim unit.
Statement 90. An embodiment of the disclosure includes the method according to statement 89, wherein the reclaim unit handle further identifies a second reclaim unit.
Statement 91. An embodiment of the disclosure includes the method according to statement 88, wherein:
   the reclaim unit identifier includes the logical address; and
   the method further comprises identifying the reclaim unit from an association between the logical address and the reclaim unit.
Statement 92. An embodiment of the disclosure includes the method according to statement 91, wherein the reclaim unit includes the logical address of the data.
Statement 93. An embodiment of the disclosure includes the method according to statement 91, wherein the logical address of the data includes a zone start logical address.
Statement 94. An embodiment of the disclosure includes the method according to statement 88, wherein:
   the reclaim unit identifier includes the logical address range; and
   the method further comprises identifying the reclaim unit from an association between the logical address range and the reclaim unit.
Statement 95. An embodiment of the disclosure includes the method according to statement 94, wherein the reclaim unit includes the logical address of the data in the logical address range.
Statement 96. An embodiment of the disclosure includes the method according to statement 95, wherein:
   a second reclaim unit includes a second logical address in the logical address range; and
   the method further comprises identifying the second reclaim unit from a second association between the logical address range and the second reclaim unit.
Statement 97. An embodiment of the disclosure includes the method according to statement 71, further comprising receiving a message at the storage device from the processor regarding management of garbage collection of the reclaim unit identified by the reclaim unit identifier.
Statement 98. An embodiment of the disclosure includes the method according to statement 97, wherein receiving the message at the storage device from the processor regarding management of garbage collection of the reclaim unit identified by the reclaim unit identifier includes receiving a host garbage collection end message at the storage device from the processor informing the storage device that the storage device manages garbage collection of the reclaim unit identified by the reclaim unit identifier.
Statement 99. An embodiment of the disclosure includes the method according to statement 97, wherein receiving the message at the storage device from the processor regarding management of garbage collection of the reclaim unit identified by the reclaim unit identifier includes assigning a priority to the reclaim unit.
Statement 100.An embodiment of the disclosure includes the method according to statement 99, wherein receiving the message at the storage device from the processor regarding management of garbage collection of the reclaim unit identified by the reclaim unit identifier further includes storing the priority assigned to the reclaim unit in a storage.
Statement 101. An embodiment of the disclosure includes the method according to statement 97, wherein receiving the message at the storage device from the processor regarding management of garbage collection of the reclaim unit identified by the reclaim unit identifier includes performing garbage collection of the reclaim unit by the storage device.
Statement 102.An embodiment of the disclosure includes the method according to statement 71, wherein receiving the message at the storage device from the processor regarding management of garbage collection of the reclaim unit identified by the reclaim unit identifier includes receiving a deallocate request at the storage device from the processor.
Statement 103.An embodiment of the disclosure includes the method according to statement 102, wherein receiving the message at the storage device from the processor regarding management of garbage collection of the reclaim unit identified by the reclaim unit identifier further includes deallocating the reclaim unit by the storage device.
Statement 104.An embodiment of the disclosure includes the method according to statement 71, further comprising:
   selecting the reclaim unit for garbage collection by the storage device; and
   performing garbage collection on the reclaim unit by the storage device.
Statement 105.An embodiment of the disclosure includes the method according to statement 104, wherein selecting the reclaim unit for garbage collection by the storage device includes selecting the reclaim unit for garbage collection by the storage device based at least in part on a media integrity issue.
Statement 106.An embodiment of the disclosure includes the method according to statement 105, wherein the media integrity issue includes a read disturb, a retention timer, or an open timer.
Statement 107.An embodiment of the disclosure includes the method according to statement 104, further comprising sending a garbage collection message to the processor from the storage device that the reclaim unit is selected for garbage collection by the storage device.
Statement 108.An embodiment of the disclosure includes the method according to statement 107, wherein:
   performing garbage collection on the reclaim unit by the storage device includes programming the data from the reclaim unit into a second reclaim unit by the storage device; and
   sending the garbage collection message to the processor from the storage device that the reclaim unit is selected for garbage collection by the storage device includes writing a second reclaim unit identifier identifying the second reclaim unit in a log page by the storage device.
Statement 109.An embodiment of the disclosure includes the method according to statement 108, wherein sending the garbage collection message to the processor from the storage device that the reclaim unit is selected for garbage collection by the storage device includes sending a log page response from the storage device to the processor, the log page response including the log page.
Statement 110.An embodiment of the disclosure includes the method according to statement 109, wherein sending the log page response from the storage device to the processor includes receiving a log page request for the log page at the storage device from the processor.
Statement 111.An embodiment of the disclosure includes an article, comprising a non-transitory storage medium, the non-transitory storage medium having stored thereon instructions that, when executed by a machine, result in:
   sending a write request from a processor to a storage device, the write request including a data to be written and a reclaim unit identifier identifying how the data is to be organized on the storage device; and
   sending a message from the processor to the storage device regarding management of garbage collection of a reclaim unit identified by the reclaim unit identifier.
Statement 112.An embodiment of the disclosure includes the article according to statement 111, wherein sending the message from the processor to the storage device regarding management of garbage collection of the reclaim unit identified by the reclaim unit identifier includes sending a host garbage collection start message from the processor to the storage device regarding management of garbage collection of the reclaim unit identified by the reclaim unit identifier
Statement 113.An embodiment of the disclosure includes the article according to statement 111, wherein sending the message from the processor to the storage device regarding management of garbage collection of the reclaim unit identified by the reclaim unit identifier includes informing the storage device that the processor is responsible for managing garbage collection of the reclaim unit identified by the reclaim unit identifier.
Statement 114.An embodiment of the disclosure includes the article according to statement 111, wherein sending the message from the processor to the storage device regarding management of garbage collection of the reclaim unit identified by the reclaim unit identifier includes informing the storage device to prioritize garbage collection of a second reclaim unit over garbage collection of the reclaim unit identified by the reclaim unit identifier.
Statement 115.An embodiment of the disclosure includes the article according to statement 111, the non-transitory storage medium having stored thereon further instructions that, when executed by the machine, result in:
   sending an allocate reclaim unit request from the processor to the storage device; and
   receiving an allocate reclaim unit response at the processor from the storage device.
Statement 116.An embodiment of the disclosure includes the article according to statement 115, wherein the allocate reclaim unit request includes a size or a contiguous flag.
Statement 117.An embodiment of the disclosure includes the article according to statement 115, wherein the allocate reclaim unit response includes the reclaim unit identifier.
Statement 118.An embodiment of the disclosure includes the article according to statement 111, the non-transitory storage medium having stored thereon further instructions that, when executed by the machine, result in sending a second message to the storage device regarding management of garbage collection of the reclaim unit.
Statement 119.An embodiment of the disclosure includes the article according to statement 118, wherein sending the second message to the storage device regarding management of garbage collection of the reclaim unit includes sending a host garbage collection end message to the storage device informing the storage device that the storage device may manage garbage collection of the reclaim unit.
Statement 120.An embodiment of the disclosure includes the article according to statement 111, wherein sending the second message to the storage device regarding management of garbage collection of the reclaim unit includes sending a deallocate request to the storage device requesting that the storage device deallocate the reclaim unit identified by reclaim unit identifier.
Statement 121.An embodiment of the disclosure includes the article according to statement 111, the non-transitory storage medium having stored thereon further instructions that, when executed by the machine, result in:
   sending a log page request from the processor to the storage device to request a log page, the log page including the reclaim unit identifier; and
   receiving a log page response from the storage device at the processor, the log page response including the log page.
Statement 122.An embodiment of the disclosure includes the article according to statement 111, wherein the reclaim unit identifier includes a reclaim unit handle, a logical address of the data, or a logical address range.
Statement 123.An embodiment of the disclosure includes the article according to statement 122, the non-transitory storage medium having stored thereon further instructions that, when executed by the machine, result in:
   sending a reclaim unit identifier request from the processor (110 to the storage device to request the reclaim unit handle, the reclaim unit handle identifying the reclaim unit; and
   receiving a reclaim unit identifier response at the processor from the storage, the reclaim unit identifier response including the reclaim unit handle from the storage device at the processor.
Statement 124.An embodiment of the disclosure includes the article according to statement 123, wherein the reclaim unit handle further identifies a second reclaim unit.
Statement 125.An embodiment of the disclosure includes the article according to statement 122, wherein the logical address of the data identifies the reclaim unit.
Statement 126.An embodiment of the disclosure includes the article according to statement 125, wherein the reclaim unit includes the logical address of the data.
Statement 127.An embodiment of the disclosure includes the article according to statement 125, wherein the logical address of the data includes a zone start logical address.
Statement 128.An embodiment of the disclosure includes the article according to statement 122, wherein the logical address range identifies the reclaim unit.
Statement 129.An embodiment of the disclosure includes the article according to statement 128, wherein the reclaim unit includes a logical address of the data in the logical address range.
Statement 130.An embodiment of the disclosure includes the article according to statement 129, wherein a second reclaim unit includes a second logical address in the logical address range.
Statement 131. An embodiment of the disclosure includes the article according to statement 111, the non-transitory storage medium having stored thereon further instructions that, when executed by the machine, result in performing garbage collection of the reclaim unit by the processor.
Statement 132.An embodiment of the disclosure includes the article according to statement 131, wherein performing garbage collection of the reclaim unit by the processor includes sending a delete request from the processor to the storage device to delete the data from the reclaim unit.
Statement 133.An embodiment of the disclosure includes the article according to statement 131, wherein performing garbage collection of the reclaim unit by the processor includes sending a read request from the processor to the storage device to read the data from the reclaim unit.
Statement 134.An embodiment of the disclosure includes the article according to statement 133, wherein performing garbage collection of the reclaim unit by the processor further includes sending a second write request from the processor to the storage device to write the data to a second reclaim unit.
Statement 135.An embodiment of the disclosure includes the article according to statement 133, wherein performing garbage collection of the reclaim unit by the processor includes sending a second write request from the processor to a second storage device to write the data to a second reclaim unit.
Statement 136.An embodiment of the disclosure includes the article according to statement 111, the non-transitory storage medium having stored thereon further instructions that, when executed by the machine, result in receiving a garbage collection message at the processor from the storage device, the garbage collection message indicating that the storage device performs garbage collection of the reclaim unit.
Statement 137.An embodiment of the disclosure includes the article according to statement 136, the non-transitory storage medium having stored thereon further instructions that, when executed by the machine, result in:
   sending a log page request from the processor to the storage device to request a log page, the log page identifying a second reclaim unit identifier the data is organized on the storage device; and
   receiving a log page response at the processor from the storage device, the log page response including the log page.
Statement 138.An embodiment of the disclosure includes an article, comprising a non-transitory storage medium, the non-transitory storage medium having stored thereon instructions that, when executed by a machine, result in:
   receiving a write request at a storage device from a processor, the write request including a data to be written and a reclaim unit identifier identifying how the data is to be organized on the storage device;
   writing the data to a reclaim unit identified by the reclaim unit identifier; and
   receiving a message at the storage device from the processor regarding management of garbage collection of the reclaim unit identified by the reclaim unit identifier.
Statement 139.An embodiment of the disclosure includes the article according to statement 138, wherein receiving the message at the storage device from the processor regarding management of garbage collection of the reclaim unit identified by the reclaim unit identifier includes receiving a host garbage collection start message at the storage device from the processor regarding management of garbage collection of the reclaim unit identified by the reclaim unit identifier.
Statement 140.An embodiment of the disclosure includes the article according to statement 138, wherein receiving the message at the storage device from the processor regarding management of garbage collection of the reclaim unit identified by the reclaim unit identifier includes receiving the message at the storage device from the processor that the processor is responsible for managing garbage collection of the reclaim unit identified by the reclaim unit identifier.
Statement 141.An embodiment of the disclosure includes the article according to statement 138, wherein receiving the message at the storage device from the processor regarding management of garbage collection of the reclaim unit identified by the reclaim unit identifier includes receiving the message at the storage device to prioritize garbage collection of a second reclaim unit over garbage collection of the reclaim unit identified by the reclaim unit identifier.
Statement 142.An embodiment of the disclosure includes the article according to statement 138, the non-transitory storage medium having stored thereon further instructions that, when executed by the machine, result in:
   receiving an allocate reclaim unit request at the storage device from the processor; and
   sending an allocate reclaim unit response from the storage device to the processor.
Statement 143.An embodiment of the disclosure includes the article according to statement 142, the non-transitory storage medium having stored thereon further instructions that, when executed by the machine, result in allocating the reclaim unit based at least in part on the allocate reclaim unit request.
Statement 144.An embodiment of the disclosure includes the article according to statement 143, wherein:
   the allocate reclaim unit request includes a size or a contiguous flag; and
   allocating the reclaim unit based at least in part on the allocate reclaim unit request includes allocating the reclaim unit based at least in part on the size or the contiguous flag.
Statement 145.An embodiment of the disclosure includes the article according to statement 143, wherein:
   allocating the reclaim unit based at least in part on the allocate reclaim unit request includes assigning the reclaim unit identifier to the reclaim unit; and
   the allocate reclaim unit response includes the reclaim unit identifier.
Statement 146.An embodiment of the disclosure includes the article according to statement 138, wherein receiving the message at the storage device from the processor regarding management of garbage collection of the reclaim unit identified by the reclaim unit identifier includes assigning a priority to the reclaim unit.
Statement 147.An embodiment of the disclosure includes the article according to statement 146, wherein receiving the message at the storage device from the processor regarding management of garbage collection of the reclaim unit identified by the reclaim unit identifier further includes storing the priority assigned to the reclaim unit in a storage.
Statement 148.An embodiment of the disclosure includes the article according to statement 138, the non-transitory storage medium having stored thereon further instructions that, when executed by the machine, result in sending a reclaim unit identifier response from the storage device to the processor, the reclaim unit identifier response including the reclaim unit identifier.
Statement 149.An embodiment of the disclosure includes the article according to statement 148, wherein sending the reclaim unit identifier response from the storage device to the processor includes receiving at the storage device a reclaim unit identifier request from the processor for the reclaim unit identifier.
Statement 150.An embodiment of the disclosure includes the article according to statement 148, wherein sending the reclaim unit identifier response from the storage device to the processor includes sending the reclaim unit identifier response from the storage device to the processor based at least in part on receiving the write request at the storage device from the host.
Statement 151.An embodiment of the disclosure includes the article according to statement 148, wherein sending the reclaim unit identifier response from the storage device to the processor includes:
   receiving a second write request at the storage device from the processor, the second write request including a second data to be written; and
   sending the reclaim unit identifier response from the storage device to the processor based at least in part on receiving the second write request at the storage device from the processor.
Statement 152.An embodiment of the disclosure includes the article according to statement 151, wherein sending the reclaim unit identifier response from the storage device to the processor further includes writing the second data to the reclaim unit as the first data in the reclaim unit.
Statement 153.An embodiment of the disclosure includes the article according to statement 151, wherein sending the reclaim unit identifier response from the storage device to the processor further includes writing the second data to the reclaim unit as the last data in the reclaim unit.
Statement 154.An embodiment of the disclosure includes the article according to statement 138, the non-transitory storage medium having stored thereon further instructions that, when executed by the machine, result in:
   receiving a reclaim unit identifier request from the processor at the storage device requesting a log page, the log page including the reclaim unit identifier; and
   sending a reclaim unit identifier response from the storage device to the processor.
Statement 155.An embodiment of the disclosure includes the article according to statement 138, wherein the reclaim unit identifier includes a reclaim unit handle, a logical address of the data, or a logical address range.
Statement 156.An embodiment of the disclosure includes the article according to statement 155, the non-transitory storage medium having stored thereon further instructions that, when executed by the machine, result in:
   receiving a reclaim unit identifier request at the storage from the processor for the reclaim unit handle; and
   sending a reclaim unit identifier response from the storage device to the processor, the reclaim unit identifier response including the reclaim unit handle,
   wherein the reclaim unit handle identifies the reclaim unit.
Statement 157.An embodiment of the disclosure includes the article according to statement 156, wherein the reclaim unit handle further identifies a second reclaim unit.
Statement 158.An embodiment of the disclosure includes the article according to statement 155, wherein:
   the reclaim unit identifier includes the logical address; and
   the non-transitory storage medium has stored thereon further instructions that, when executed by the machine, result in identifying the reclaim unit from an association between the logical address and the reclaim unit.
Statement 159.An embodiment of the disclosure includes the article according to statement 158, wherein the reclaim unit includes the logical address of the data.
Statement 160.An embodiment of the disclosure includes the article according to statement 158, wherein the logical address of the data includes a zone start logical address.
Statement 161.An embodiment of the disclosure includes the article according to statement 155, wherein:
   the reclaim unit identifier includes the logical address range; and
   the non-transitory storage medium has stored thereon further instructions that, when executed by the machine, result in identifying the reclaim unit from an association between the logical address range and the reclaim unit.
Statement 162.An embodiment of the disclosure includes the article according to statement 161, wherein the reclaim unit includes the logical address of the data in the logical address range.
Statement 163.An embodiment of the disclosure includes the article according to statement 162, wherein:
   a second reclaim unit includes a second logical address in the logical address range; and
   the non-transitory storage medium has stored thereon further instructions that, when executed by the machine, result in identifying the second reclaim unit from a second association between the logical address range and the second reclaim unit.
Statement 164.An embodiment of the disclosure includes the article according to statement 138, the non-transitory storage medium having stored thereon further instructions that, when executed by the machine, result in receiving a message at the storage device from the processor regarding management of garbage collection of the reclaim unit identified by the reclaim unit identifier.
Statement 165.An embodiment of the disclosure includes the method according to statement 164, wherein receiving the message at the storage device from the processor regarding management of garbage collection of the reclaim unit identified by the reclaim unit identifier includes receiving a host garbage collection end message at the storage device from the processor informing the storage device that the storage device manages garbage collection of the reclaim unit identified by the reclaim unit identifier.
Statement 166.An embodiment of the disclosure includes the article according to statement 164, wherein receiving the message at the storage device from the processor regarding management of garbage collection of the reclaim unit identified by the reclaim unit identifier includes assigning a priority to the reclaim unit.
Statement 167.An embodiment of the disclosure includes the article according to statement 166, wherein receiving the message at the storage device from the processor regarding management of garbage collection of the reclaim unit identified by the reclaim unit identifier further includes storing the priority assigned to the reclaim unit in a storage.
Statement 168.An embodiment of the disclosure includes the article according to statement 164, wherein receiving the message at the storage device from the processor regarding management of garbage collection of the reclaim unit identified by the reclaim unit identifier includes performing garbage collection of the reclaim unit by the storage device.
Statement 169.An embodiment of the disclosure includes the article according to statement 138, wherein receiving the message at the storage device from the processor regarding management of garbage collection of the reclaim unit identified by the reclaim unit identifier includes receiving a deallocate request at the storage device from the processor.
Statement 170.An embodiment of the disclosure includes the article according to statement 169, wherein receiving the message at the storage device from the processor regarding management of garbage collection of the reclaim unit identified by the reclaim unit identifier further includes deallocating the reclaim unit by the storage device.
Statement 171.An embodiment of the disclosure includes the article according to statement 138, the non-transitory storage medium having stored thereon further instructions that, when executed by the machine, result in:
   selecting the reclaim unit for garbage collection by the storage device; and
   performing garbage collection on the reclaim unit by the storage device.
Statement 172.An embodiment of the disclosure includes the article according to statement 171, wherein selecting the reclaim unit for garbage collection by the storage device includes selecting the reclaim unit for garbage collection by the storage device based at least in part on a media integrity issue.
Statement 173.An embodiment of the disclosure includes the article according to statement 172, wherein the media integrity issue includes a read disturb, a retention timer, or an open timer.
Statement 174.An embodiment of the disclosure includes the article according to statement 171, the non-transitory storage medium has stored thereon further instructions that, when executed by the machine, result in sending a garbage collection message to the processor from the storage device that the reclaim unit is selected for garbage collection by the storage device.
Statement 175.An embodiment of the disclosure includes the article according to statement 174, wherein:
   performing garbage collection on the reclaim unit by the storage device includes programming the data from the reclaim unit into a second reclaim unit by the storage device; and
   sending the garbage collection message to the processor from the storage device that the reclaim unit is selected for garbage collection by the storage device includes writing a second reclaim unit identifier identifying the second reclaim unit in a log page by the storage device.
Statement 176.An embodiment of the disclosure includes the article according to statement 175, wherein sending the garbage collection message to the processor from the storage device that the reclaim unit is selected for garbage collection by the storage device includes sending a log page response from the storage device to the processor, the log page response including the log page.
Statement 177.An embodiment of the disclosure includes the article according to statement 176, wherein sending the log page response from the storage device to the processor includes receiving a log page request for the log page at the storage device from the processor.

## Claims

1. A system, comprising:
a storage device (120); and
a processor (110) configured to send a write request (640) to the storage device (120), the write request (640) including a data (645) to be written and a reclaim unit identifier (625) identifying how the data (645) is to be organized on the storage device (120),
wherein the processor (110) is further configured to send a message to the storage device regarding management of garbage collection of a reclaim unit (420) identified by the reclaim unit identifier (625).

2. The system according to claim 1, wherein the storage device (120) is configured to assign a first garbage collection priority to the reclaim unit (420), and
preferably wherein:
the storage device (120) includes a second reclaim unit; and
the storage device (120) includes a garbage collection priority unit (340) to assign a second garbage collection priority to the second reclaim unit, the first garbage collection priority lower than the second garbage collection priority.

3. The system according to claim 1 or 2, wherein:
the reclaim unit (420) includes a first size; and
the storage device (120) includes a second reclaim unit, the second reclaim unit including a second size, wherein the first size and the second size are different.

4. The system according to any one of claims 1 to 3, wherein the storage device (120) includes a controller (125, 315, 330) to select the reclaim unit (420) for garbage collection and to send a garbage collection message to the processor (110) to inform the processor (110), preferably wherein the controller (125, 315, 330) is configured to select the reclaim unit (420) for garbage collection based at least in part on a media integrity issue.

5. A method, comprising:
sending (905, 1005) a write request (640) from a processor (110) to a storage device (120), the write request (640) including a data (645) to be written and a reclaim unit identifier (625) identifying how the data (645) is to be organized on the storage device (120); and
sending (915, 1015) a message from the processor (110) to the storage device regarding management of garbage collection of a reclaim unit (420) identified by the reclaim unit identifier (625).

6. The method according to claim 5, further comprising sending a second message to the storage device regarding management of garbage collection of the reclaim unit, and
preferably further comprising:
performing garbage collection of the reclaim unit by the processor (110); and/or
receiving a garbage collection message at the processor (110) from the storage device (120), the garbage collection message indicating that the storage device (120) performs garbage collection of the reclaim unit.

7. A method, comprising:
receiving (905, 1005) a write request (640) at a storage device (120) from a processor (110), the write request (640) including a data (645) to be written and a reclaim unit identifier (625) identifying how the data (645) is to be organized on the storage device (120);
writing the data (645) to a reclaim unit (420) identified by the reclaim unit identifier (625); and
receiving (915, 1015) a message at the storage device (120) from the processor regarding management of garbage collection of the reclaim unit (420) identified by the reclaim unit identifier (625).

8. The method according to claim 7, wherein receiving the message at the storage device (120) from the processor regarding management of garbage collection of the reclaim unit identified by the reclaim unit identifier (625) includes assigning a priority to the reclaim unit.

9. The method according to claim 7 or 8, wherein the reclaim unit identifier (625) includes a reclaim unit handle, the reclaim unit handle identifying the reclaim unit and a second reclaim unit.

10. The method according to any one of claims 7 to 9, wherein:
the reclaim unit identifier (625) includes a logical address; and
the method further comprises identifying the reclaim unit from an association between the logical address and the reclaim unit.

11. The method according to any one of claims 7 to 10, wherein:
the reclaim unit identifier (625) includes a logical address range (730), the logical address range (730) including a first logical address and a second logical address;
the reclaim unit includes the logical address in the logical address range (730);
a second reclaim unit includes the second logical address in the logical address range (730); and
the method further comprises:
identifying the reclaim unit from an association between the logical address range (730) and the reclaim unit; and
identifying the second reclaim unit from a second association between the logical address range (730) and the second reclaim unit.

12. The method according to any one of claims 7 to 11, further comprising receiving a message at the storage device (120) from the processor regarding management of garbage collection of the reclaim unit identified by the reclaim unit identifier (625).

13. The method according to claim 12, wherein receiving the message at the storage device (120) from the processor regarding management of garbage collection of the reclaim unit identified by the reclaim unit identifier (625) includes performing garbage collection of the reclaim unit by the storage device (120).

14. The method according to any one of claims 7 to 13, further comprising:
selecting the reclaim unit for garbage collection by the storage device (120); and
performing garbage collection on the reclaim unit by the storage device (120).

15. The method according to claim 14, further comprising sending a garbage collection message to the processor (110) from the storage device (120) that the reclaim unit is selected for garbage collection by the storage device (120), and
preferably wherein:
performing garbage collection on the reclaim unit by the storage device (120) includes programming the data (645) from the reclaim unit into a second reclaim unit by the storage device (120); and
sending the garbage collection message to the processor (110) from the storage device (120) that the reclaim unit is selected for garbage collection by the storage device (120) includes writing a second reclaim unit identifier identifying the second reclaim unit in a log page (810) by the storage device (120).
